# EUROPÄISCHE PATENTSCHRIFT

(11) **EP 3 764 081 B1**
(45) Veröffentlichungstag und Bekanntmachung des Hinweises auf die Patenterteilung: **03.04.2024**
(21) Anmeldenummer: 19185806.7
(22) Anmeldetag: 11.07.2019
(51) Int. Cl.: G01N 21/25, G01N 21/31, G01N 21/47, G01J 3/02, G01J 3/10, G01S 17/88, G01N 21/17, G01N 21/39, G08G 1/01

(54) **SENSORSYSTEM UND VERFAHREN ZUR MOLEKÜLSPEKTROSKOPISCHEN BESTIMMUNG DER OBERFLÄCHENBESCHAFFENHEIT EINES VOR EINEM KRAFTFAHRZEUG BEFINDLICHEN UNTERGRUNDS**
SENSOR SYSTEM AND METHOD FOR MOLECULE SPECTROSCOPIC DETERMINATION OF THE SURFACE CONDITION OF A SUBSURFACE LOCATED IN FRONT OF A MOTOR VEHICLE
SYSTÈME DE CAPTEUR ET PROCÉDÉ DE DÉTERMINATION SPECTROSCOPIQUE MOLÉCULAIRE DE L'ÉTAT DE SURFACE D'UN FOND SE TROUVANT AVANT UN VÉHICULE AUTOMOBILE

(43) Veröffentlichungstag der Anmeldung: 13.01.2021
(73) Patentinhaber: ZKW Group GmbH, 3250 Wieselburg (AT)
(72) Erfinder: Hartmann, Peter, 3392 Schönbühel-Aggsbach (AT)
(74) Vertreter: Patentanwaltskanzlei Matschnig & Forsthuber OG

(56) Entgegenhaltungen:
- DE-A1-102014 212 032
- DE-A1-102017 105 983

## Beschreibung

Die Erfindung betrifft ein Sensorsystem zur molekülspektroskopischen Bestimmung der Oberflächenbeschaffenheit eines vor einem Kraftfahrzeug befindlichen Untergrunds. Das Sensorsystem kommt insbesondere bei selbstfahrenden, d.h. vollständig oder teilweise autonom betriebenen, Kraftfahrzeugen zum Einsatz.

Die Erfindung betrifft ferner ein Verfahren zur molekülspektroskopischen Bestimmung der Oberflächenbeschaffenheit eines vor einem Kraftfahrzeug befindlichen Untergrunds unter Verwendung einer Sensoreinheit gemäß der Erfindung. Das Verfahren kommt insbesondere bei selbstfahrenden, d.h. vollständig oder teilweise autonom betriebenen, Kraftfahrzeugen zum Einsatz.

Darüber hinaus betrifft die Erfindung ein Kraftfahrzeug umfassend ein Kraftfahrzeugsteuerungssystem und ein Sensorsystem gemäß der Erfindung, wobei das Kraftfahrzeug vorzugsweise ein selbstfahrendes, d.h. vollständig oder teilweise autonom betriebenes, Kraftfahrzeug ist.

Technische Einrichtungen wie Sensorsysteme, die zum zuverlässigen Erkennen einer momentanen Umfeldsituation eines Kraftfahrzeugs vorgesehen sind, stellen eine besondere Herausforderung dar, wenn Fahrzeuge nicht mehr von einem Menschen gelenkt werden, sondern vollständig autonom oder teilweise autonom, z.B. über einen autonomen und den Fahrer entlastenden Selbstfahrmodus, agieren. Derartige Sensorsysteme werden aufgrund der fortschreitenden technologischen Entwicklung auf dem Gebiet des autonomen Fahrens zunehmend an Bedeutung gewinnen. Sie sollen wünschenswerter Weise eine vorliegende Umfeldsituation zuverlässig erkennen und bewerten, so dass auf Grundlage der erfassten Situation eine entsprechende Fahrzeugsteuerung angesprochen oder bestimmte Fahrmanöver wie Ausweichen oder Abbremsen eingeleitet werden können.

Sensorsysteme für autonom fahrende Kraftfahrzeuge, welche auf optischen Kamerasystemen mit VIS-Kameras, IR-Kameras, RADAR, LIDAR und/oder Ultraschall basieren, sind grundsätzlich bekannt. Bei den derzeit entwickelten autonom fahrenden Fahrzeugprototypen werden Sensoren rund um den Außenbereich des Kraftfahrzeugs, aber auch am Dach platziert. Die Sensorik in der Außengeometrie des Kraftfahrzeugs, speziell im Frontbereich des Kraftfahrzeugs, wird entscheidend für die Umsetzung selbstfahrender Kraftfahrzeuge in Serie sein.

Wenn der menschliche Fahrer auf Sicht fährt, so stellt sich dieser laufend die Frage, ob sich in Fahrtrichtung ein platzmäßig ausreichend befahrbarer Untergrund mit vertrauenswürdiger Oberfläche, zumeist eine Straße oder eine Fahrbahn, befindet. Diese Frage wird durch die oben genannten bestehenden sensorischen Systeme immer nur zum Teil gelöst. Beispielsweise können Sensorsysteme, die auf LIDAR/RADAR basieren, zwar "ausreichend Platz" identifizieren, erkennen aber nicht, ob es sich um einen befahrbaren Untergrund wie z.B. eine asphaltierte Straße handelt. Kamerasysteme können eine "Straße" identifizieren und, mit Entfernungsdaten kombiniert, mit Hilfe von Bildverarbeitungsalgorithmen "ausreichend Platz" indirekt beurteilen. Bei der Beurteilung der Vertrauenswürdigkeit des Untergrunds hinsichtlich der Oberflächeneigenschaften und der Oberflächenbeschaffenheit scheitern die RADAR/LIDAR-Ansätze jedoch grundsätzlich; bei Kamerasystemen ist zur Bildanalyse und zur Bildinterpretation für eine letztendlich immer noch sehr unsichere Aussage ein rechnerisch aufwändiger *machine-* und *deep-learning-*Ansatz notwendig.

Zur Beurteilung der Oberflächenbeschaffenheit eines Untergrunds wurden daher Sensorsysteme vorgeschlagen, welche den Ansatz einer molekülspektroskopischen Bestimmung der Oberflächenbeschaffenheit verfolgen.

So wurde die qualitative und quantitative chemische Bestimmung verschiedenster Oberflächen, unter anderem von Straßen, mittels hyperspektralen Bildgebungsverfahren ("hyperspectral imaging") bereits von Warren und Cohn beschrieben (Warren und Cohn, 2017, Chemical detection on surfaces by hyperspectral imaging; J. Appl. Remote Sens. 11(1): 015013).

Die US 2015/0120093 A1 beschreibt ein Verfahren zur Identifikation von Wasser und Eis auf einem vor einem Kraftfahrzeug befindlichen Untergrund mittels IR-Spektroskopie. Die Klassifizierung der Beschaffenheit von Straßenoberflächen mittels IR-Spektralanalyse wurde auch in der Fachliteratur beschrieben (Jonsson et al., 2015, Road Surface Status Classification Using Spectral Analysis of NIR Camera Images, IEEE Sensors Journal 15(3): 1641 - 1656; Casselgren et al., 2016, Road condition analysis using NIR illumination and compensating for surrounding light, Optics and Lasers in Engineering 77: 175 - 182).

Ferner beschreibt die EP 1 635 163 B1 ein Kraftfahrzeug mit einer Vorrichtung, mit der mittels IR-Spektroskopie die Oberflächenbeschaffenheit einer vor dem bewegten Kraftfahrzeug befindlichen Fahrbahn in Bezug auf Nässe, Trockenheit oder Eis/Schnee bestimmt werden kann.

Aus der DE 10 2017 105983 A1 ist ein Verfahren zum Untersuchen einer Straße auf Substanzen bekannt, welches das Erzeugen eines Infrarotlicht-Blitzes mit einer Wellenlänge umfasst.

Die DE 10 2014 212032 A1 zeigt ein Verfahren zum Detektieren einer Fahrbahn eines Fahrzeugs, wobei das Verfahren die Erzeugung eines Lichtsignals und das Aussenden des Lichtsignals auf einen beleuchteten Bereich der Fahrbahn umfasst.

Die oben genannten bislang bekannten molekülspektroskopischen Sensorsysteme sind auf bestimmte Fahrbahnzustände und die Bestimmung einer bestimmten Oberflächenbeschaffenheit beschränkt. Da der in Fahrzeugen für die Anordnung von Sensorikeinrichtungen zur Verfügung stehende Bauraum insbesondere an der Fahrzeugvorderfront an sich limitiert ist und selbstfahrende Fahrzeuge für den autonomen bzw. teilautonomen Betrieb mit einer Vielzahl an spezialisierten Sensoreinrichtungen ausgestattet sein müssen, ist der Einsatz der bekannten molekülspektroskopischen Sensorsysteme für den Einsatz in selbstfahrenden Fahrzeugen aufgrund des Verhältnisses von Platz und Nutzen daher wenig attraktiv. Ferner sind bekannte Systeme aufgrund der notwendigen Strahlungsleistung für einen allgemeinen Einsatz problematisch umzusetzen.

Es ist eine Aufgabe der Erfindung, ein verbessertes Sensorsystem zur molekülspektroskopischen Bestimmung der Oberflächenbeschaffenheit eines vor einem Kraftfahrzeug befindlichen Untergrunds bereitzustellen, mit welchem ein sehr breites Spektrum an verschiedenen Oberflächenzuständen eines vor einem Kraftfahrzeug befindlichen Untergrunds bestimmt werden kann und welches besonders platzsparend und betriebssicher im Außenbereich des Kraftfahrzeugs, insbesondere in/an der Kraftfahrzeugvorderfront untergebracht werden kann. Eine Aufgabe liegt insbesondere darin, ein Sensorsystem bereitzustellen, welches für vollständig autonom oder teilweise autonom betriebene Kraftfahrzeuge besonders geeignet ist und eine weitgehend autonome Steuerung derselben ermöglicht.

Diese Aufgaben werden durch ein Sensorsystem zur molekülspektroskopischen Bestimmung der Oberflächenbeschaffenheit eines vor einem Kraftfahrzeug, vorzugsweise selbstfahrenden Kraftfahrzeug, befindlichen Untergrunds, gemäß Anspruch 1, gelöst.

Diese Aufgaben werden durch außerdem durch ein Verfahren zur molekülspektroskopischen Bestimmung der Oberflächenbeschaffenheit eines vor einem Kraftfahrzeug, insbesondere selbstfahrenden Kraftfahrzeug, befindlichen Untergrunds unter

Verwendung einer Sensoreinheit gemäß der Erfindung gelöst, wobei das Verfahren die Verfahrensschritte gemäß Anspruch 9 umfasst.

Die spezifische erfindungsgemäße Kombination aus zumindest einem breitbandigen Strahler, der breitbandige Strahlung im VIS/IR-Wellenlängenspektrum oder im IR-Wellenlängenspektrum emittiert, aus zumindest einem spezifischen adaptiven Strahlungsemitter, welcher eine spezifisch auf vorbestimmte Oberflächenleitanalyten des Untergrunds abgestimmte Wellenlänge bzw. ein schmalbandiges Wellenlängenspektrum emittiert, hat große Vorteile gegenüber den aus dem Stand der Technik bekannten Verfahren und Sensorsystemen. Mittels der auf der breitbandigen Strahlung basierenden qualitativen Übersichtsauswertung sowie den Oberflächenleitanalyten-spezifischen quantitativen Spektraldaten werden zeitlich und örtlich aufgelöste Oberflächenbeschaffenheitsangaben des vor dem Kraftfahrzeug befindlichen Untergrunds erhalten, so dass eine weitgehend autonome Steuerung des Kraftfahrzeugs möglich ist. Die Oberflächenbeschaffenheitsangaben werden anhand der gemessenen substanzspezifischen Spektren und der Konzentration relevanter vorbestimmter Oberflächenleitanalyten (zB. Bitumen, Chlorophyll, Wasser in Form von Eis, Schnee, Nässe) des Untergrunds bestimmt und im Fahrbetrieb bzw. in der Steuerung des Kraftfahrzeugs berücksichtig.

Die Erfindung ermöglicht daher den Einsatz gezielt komponierter Spektren im VIS/IR bzw. IR-Bereich mit aufgrund situativ angepasster Emissionsleistung hoher Betriebssicherheit und folglich die Erfassung einer großen Bandbreite an verschiedenen Oberflächenzuständen eines vor einem Kraftfahrzeug befindlichen Untergrunds. Insbesondere ermöglicht das erfindungsgemäße Sensorsystem eine verlässliche molekülspektroskopische Bestimmung der Oberflächenbeschaffenheit des Untergrunds und damit eine Aussage darüber, ob sich ein platzmäßig ausreichend befahrbarer Boden mit vertrauenswürdiger Oberfläche, z.B. eine Straße oder eine Fahrbahn, vor dem Kraftfahrzeug befindet. Sie ermöglicht ferner die Identifizierung einer Gefahrensituation anhand der zeitlich und örtlich aufgelösten chemischen Zusammensetzung der Oberfläche des Untergrunds (z.B. Hindernis auf der Straße wie Steine, überfahrenes Tier; gefährliche Fahrbahnverhältnisse wie Nässe, Eis, Schnee; etc.). Zudem lässt sich das Sensorsystem bei geringem Platzbedarf und mit gleichzeitig hohem Nutzen in der Vorderfront des Kraftfahrzeugs unterbringen.

Der Begriff "Untergrund" wie hierin verwendet bezieht sich auf jegliche Art von Boden oder Gelände, der/das sich in sinnvoller Weise vor einem Kraftfahrzeug befinden kann. Unter dem Begriff "befahrbarer Untergrund" ist daher in erster Linie eine Fahrbahn/Straße zu verstehen, wie eine asphaltierte Fahrbahn/Straße oder eine Schotterstraße. Vorzugsweise handelt es sich um eine asphaltierte Fahrbahn/Straße im herkömmlichen Sinn. Unter dem Begriff "Oberfläche des Untergrunds" ist sowohl Material zu verstehen, das ein Teil des Bodens/Geländes ist (z.B. Bitumen als Bestandteil einer Asphaltstraße; oder Chlorophyll als Bestandteil der Vegetation am Fahrbahnrand) als auch Material, welches sich auf dem Boden/Gelände befindet (z.B. Eis, Nässe, Laub oder Steine/Geröll, die sich auf einer Fahrbahn befinden). Sinngemäß ist unter der "Oberflächenbeschaffenheit des Untergrunds" bzw. unter "Oberflächenbeschaffenheitsangabe des Untergrunds" jegliches Material zu verstehen, welches ein Teil des Bodens/Geländes ist oder sich auf dem Boden/Gelände befindet.

Der Begriff "Oberflächenleitanalyt" wie hierin verwendet kann sich sowohl auf einzelne Substanzen/Moleküle (z.B. Chlorophyll, H₂O, TiO₂) als auch auf komplexere Substanzzusammensetzungen (z.B. Bitumen, Holz, Treibstoffe, Schmieröl, Schlamm) beziehen.

Die gemäß dem erfindungsgemäßen Verfahren anhand der qualitativen Übersichtsauswertung spezifisch ausgewählten Untergrundbereiche werden zunächst dahingehend ausgewählt, ob es sich um einen befahrbaren Untergrund handelt, insbesondere um Bereiche, in denen anhand der Übersichtsauswertung dominant Asphalt (Leitanalyt Bitumen) erkannt wurde, wobei spezifische Bereiche des Untergrunds, in welchen anhand der Übersichtsauswertung Anomalien (z.B. Hindernisse, gefährliche Fahrbahnverhältnisse) erkannt wurden, besonders genau untersucht werden. Anhand dieser zeitlich und örtlich molekülspektroskopisch bestimmten Oberflächenbeschaffenheitsangaben kann mittels der Steuerungs- und Auswerteeinrichtung ein zeitlich und örtlich aufgelöster Zustand des Untergrunds bzw. der Fahrbahn festgelegt werden, wie "befahrbarer Untergrund/Fahrbahn", "Fahrbahn mit veränderter Oberflächeneigenschaft (Eis, Nässe, Hindernis)" oder "keine Fahrbahn/Straßenrand/unbefahrbares Gelände)". Beispielsweise kann der Fahrbahnzustand "asphaltierte Fahrbahn/Straße" anhand des Gehalts an Bitumen im Asphalt festgelegt werden, wobei ein sinnvoller Konzentrationsbereich von Bitumen im Asphalt in einem Bereich von 2% -10% liegt und der Rest Gestein ist; falls die molekülspektroskopisch erfasste Bitumenkonzentration unter 2% liegt, befindet sich keine asphaltierte Straße vor dem bewegten Kraftfahrzeug (Beschaffenheit des Untergrunds ist "keine asphaltierte Fahrbahn"). Zweckmäßigerweise werden die maximale Breite einer Fahrbahn und zusätzlich die angrenzenden Bereiche außerhalb der Fahrbahn analysiert, um den Kontrast zwischen den Zuständen "Fahrbahn" und "keine Fahrbahn/Nebenfahrbahn" erkennen zu können. Diese Informationen zu den Fahrbahnzuständen bzw. Oberflächenbeschaffenheitsangaben des Untergrunds werden von der Steuerungs- und Auswerteeinrichtung an die Kraftfahrzeugsteuerung weitergegeben und im Fahrbetrieb bzw. in der Steuerung der Fahrmanöver des Kraftfahrzeugs berücksichtigt (z.B. Straßenverlauf folgen, Ausweichen, Abbremsen, Geschwindigkeit drosseln etc.).

Die mittels des erfindungsgemäßen Sensorsystems bzw. Verfahrens durchgeführte molekülspektroskopische Bestimmung der Oberflächenbeschaffenheit des vor einem Kraftfahrzeug befindlichen Untergrunds erfolgt nach den hinlänglich bekannten spektroskopischen Methoden und Prinzipien, die den UV/VIS-Wellenlängenbereich nutzen.

Die VIS/UV-Spektroskopie und die IR-Spektroskopie sind weit verbreitete und sehr gut etablierte molekülspektroskopische Verfahren, die in verschiedensten technischen Bereichen zur Bestimmung von Substanzen Anwendung finden. Die IR-Spektroskopie ist eine außerordentlich leistungsfähige Methode zur hochselektiven Identifizierung von Substanzen durch mittels aktiver IR-Beleuchtung unterstützter Erfassung substanzspezifischer Spektren ("fingerprint"-Muster neben gruppenspezifischen Absorptionsbanden) sowie zur genauen Quantifizierung von Substanzen. Die IR-Spektroskopie ermöglicht selbst bei komplexen Mischungen eine sehr genaue Spurenanalytik als auch Fernanalytik. IR-spektroskopische Methoden kommen daher dort, wo komplexe Substanzmischung untersucht werden, zum Einsatz, z.B. in der industriellen Prozessüberwachung in der lebensmittelverarbeitenden Industrie, beim Recycling von Stoffen, der Förderung von Rohstoffen, in der pharmazeutischen Industrie, der Überprüfung von Rückständen (z.B. Ölrückstände im Meerwasser bei Bohrinseln) oder bei Luftgüte- und Atmosphärenmessungen. Moderne Hochleistungs-Varianten der IR-Spektroskopie, welche eine hochselektive Identifizierung und genaue Quantifizierung komplexer Substanzmischungen in Echtzeit ermöglichen, sind der Fachwelt unter den Bezeichnungen hyperspektrales Bildgebungsverfahren *"hyperspectral imaging"* (Warren und Cohn, 2017, Chemical detection on surfaces by hyperspectral imaging; J. Appl. Remote Sens. 11(1): 015013) bzw. *"chemical colour imaging"* (siehe z.B. www.perception-park.com), eine Weiterentwicklung des *"hyperspectal imaging",* bekannt. Für die IR-Spektroskopie werden aufgrund der kurzen Messzeiten insbesondere Fourier-Transform-Infrarotspektrometer (FTIR-Spektrometer) eingesetzt, deren Aufbau hinlänglich bekannt ist, die hochauflösend arbeiten (spektral, lateral, zeitlich) und die auch in mobiler und/oder miniaturisierter Form, beispielsweise in Form von Sensoren (z.B. hyperspektrale IR-Sensoren von Specim (Fi), Hamamatsu (JP)) erhältlich sind. Für die laterale Erfassung ist die Kombination der FTIR-Spektroskopie mit Scan-Elementen bekannt (z.B. MEMS-FTIR-Sensoren nach dem Michelson Interferometerprinzip des Herstellers Si-Ware Systems (US, FR, EGY; www.si-ware.com), wodurch sowohl eine bild- als auch zeilenweise ortsaufgelöste Erfassung und Auswertung der substanzspezifischen Zusammensetzung bzw. der Beschaffenheit von Oberflächen möglich ist.

Eine weitere gut etablierte molekülspektroskopische Methode ist die Ramanspektroskopie, eine der IR-Spektroskopie komplementäre Methode, welche als Ergänzung der Auswertung von IR-induzierten Absorptionsschwingungen durch Moleküle hervorgerufene Streu- und Beugungseffekte miteinbezieht, wodurch eine Phasendiskriminierung möglich ist, z.B. die Unterscheidung von verschiedenen Aggregatzuständen des Wasser (Eis, Schnee, Schneematsch, Flüssigkeit).

Ein Fachmann auf dem Gebiet ist ohne weiteres in der Lage, die in der Fachwelt hinlänglich bekannten spektroskopischen Methoden und Prinzipien, die den UV/VIS-Wellenlängenbereich nutzen, einschließlich der oben genannten Methoden, sowie entsprechende Vorrichtungen auf die vorliegende Erfindung anzuwenden bzw. anzupassen. Die molekülspektroskopische Auswertung im VIS/IR bzw. IR-Wellenlängenspektrum, wie sie gemäß der Erfindung durchgeführt wird, erfolgt sowohl quantitativ als auch qualitativ sowie zeitlich und örtlich aufgelöst.

Der Begriff "breitbandige Strahlung" bezieht sich auf ein ausgesendetes breitbandiges Analysenspektrum, welches einen breiten Wellenlängenbereich im VIS/IR-Bereich, vorzugsweise im VIS- und mittleren IR-Bereich, umfasst. Der breite Wellenlängenbereich ist so gewählt, dass Wellenlängen X für wichtige und aussagekräftige Oberflächenleitanalyten, die Rückschluss auf spezifische Fahrbahnzustände erlauben, umfasst sind, insbesondere, aber nicht beschränkt auf Bitumen (-CH₄, X= ca. 7,7 µm) als Leitanalyt für eine Asphaltstraße, Chlorophyll (-C=C-, X= ca. 6,21 µm; -OH, λ= ca. 2,99 µm) als Leitanalyt für die Vegetation am Straßenrand oder auf dem Untergrund, Titanoxid (X= ca. 1-1,6 µm) als Leitanalyt für Fahrbahnstreifen und/oder Wasser als Leitanalyt für Nässe/Eis/Schnee auf dem Untergrund (H₂O, λ= ca. 6,3 µm).

Bei der Führung des Kraftfahrzeugs im Fahrbetrieb kann beispielsweise die molekülspektroskopisch bestimmte Fahrbahnbreite halbiert werden und die Fahrt zentriert auf der - bei Rechtsverkehr - rechten Fahrbahnhälfte erfolgen (bei Linksverkehr entsprechend auf der linken Fahrbahnhälfte). Bei schmalen Fahrbahnstellen kann auf Grundlage der molekülspektrokopisch gemessenen und ausgewerteten Daten eine Orientierung am Fahrbahnrand erfolgen, so dass die Lenkbewegungen sachte durchgeführt werden.

Bei bevorzugten Varianten des erfindungsgemäßen Sensorsystems ist der zumindest eine breitbandige Strahler dazu eingerichtet, breitbandige Strahlung mit einem Wellenlängenspektrum von 0,4 µm - 20 µm, vorzugsweise mit einem Wellenlängenspektrum von 0,8 µm - 10 µm, auf den vor dem Kraftfahrzeug befindlichen Untergrund zu emittieren und die zumindest eine Wellenlänge bzw. der zumindest eine Wellenlängenbereich der von dem mindestens einen adaptiven Strahlungsemitter emittierten Strahlung liegt in einem Wellenlängenbereich von 0,4 µm - 20 µm, vorzugsweise in einem Wellenlängenbereich von 0,8 µm - 10 µm.

Dementsprechend ist es bevorzugt, wenn in Schritt a.) des erfindungsgemäßen Verfahrens von dem breitbandigen Strahler breitbandige Strahlung mit einem Wellenlängenspektrum von 0,4 µm - 20 µm, vorzugsweise mit einem Wellenlängenspektrum von 0,8 µm - 10 µm, auf den vor dem Kraftfahrzeug befindlichen Untergrund emittiert wird und dass in Schritt d.) von dem mindestens einen adaptiven Strahlungsemitter zumindest eine adaptive Strahlung emittiert wird, die eine Wellenlänge bzw. einen Wellenlängenbereich aufweist, die/der in einem Wellenlängenbereich von 0,4 µm - 20 µm, vorzugsweise in einem Wellenlängenbereich von 0,8 µm - 10 µm, liegt.

Erfindungsgemäß umfasst die Sendeeinheit zwei oder mehr breitbandige Strahler identischer Bauart, welche jeweils eine stabförmige Form aufweisen, an jeweils einer Stirnseite miteinander verbunden sind und die jeweils unabhängig voneinander ansteuerbar sind. Vorzugsweise sind die zwei oder mehr breitbandigen Strahler mit ihrer Längsausdehnung an der Breitenausdehnung der Fahrzeugfront oder in Richtung der Fortbewegung ausgerichtet. Vorzugsweise Auf diese Weise ist es möglich, die insgesamt von den breitbandigen Strahlern emittierte breitbandigen Strahlung zu dimmen, indem die breitbandigen Strahler jeweils unabhängig voneinander aus- oder eingeschalten werden, gegebenenfalls unter Anpassen der Leuchttiefe und/oder der Leuchtweite der insgesamt emittierten breitbandigen Strahlung. Dementsprechend kann es bei einer vorteilhaften Variante des erfindungsgemäßen Verfahrens vorgesehen sein, dass die Sendeeinheit zwei oder mehr breitbandige Strahler identischer Bauart umfasst, welche jeweils unabhängig voneinander ansteuerbar sind, wobei zum Dimmen der insgesamt emittierten breitbandigen Strahlung die breitbandigen Strahler jeweils unabhängig voneinander aus- oder eingeschalten werden, gegebenenfalls unter Anpassen der Leuchttiefe und/oder der Leuchtweite der insgesamt emittierten breitbandigen Strahlung. Das Dimmen der insgesamt von den breitbandigen Strahlern emittierten breitbandigen Strahlung ermöglicht ein Wegfahren des Kraftfahrzeugs, ohne durch die Wärmeentwicklung, die durch die breitbandige Strahlung entsteht, Objekte zu beschädigen oder zu gefährden. Es ist nicht möglich, einen einzelnen der breitbandigen Strahler zu dimmen, da sich ansonsten die spektrale Abstrahlung verändern würde.

Bei bestimmten Varianten kann der zumindest eine breitbandige Strahler der Sendeeinheit statisch sein und folglich statisch im Kraftfahrzeug eingebaut sein. Bei anderen Varianten kann der zumindest eine breitbandige Strahler adaptiv sein und mittels ansteuerbaren Mitteln zum räumlichen Verschwenken ausgestattet sein. Breitbandige Strahler, mit welchem der gesamte VIS/IR-Wellenlängenbereich abdeckt werden kann sind zum Beispiel von Thorlabs erhältlich (SLS 303, Thorlabs Inc. (US)). Breitbandige Strahler, welche einen breitbandigen IR-Wellenlängenbereich von 1 - 25 µm abdecken sind z.B. von Newport Spectra-Physics GmbH (DE; www.newport.com) beziehbar. Bei bestimmten Varianten kann ein breitbandiger Strahler auch aus mehreren IR-Modulen zusammengesetzt sein, um den gewünschten breitbandigen Wellenlängenbereich abzudecken (z.B. Kombination aus IR-Modulen des Herstellers Optron (DE)).

Bei vorteilhaften Varianten umfasst die Sendeeinheit einen, vorzugsweise elliptischen, Reflektor, welcher dazu eingerichtet ist, die von dem zumindest einen breitbandigen Strahler emittierte VIS/IR-Strahlung auf den vor dem Kraftfahrzeug befindlichen Untergrund zu reflektieren. Der Reflektor hat die Aufgabe, die von dem zumindest einen breitbandigen Strahler emittierte breitbandige Strahlung möglichst vollständig zu erfassen und nach vorne, d.h. in Richtung des zu analysierenden Untergrunds vor dem Kraftfahrzeug, auszurichten. Ziel ist es, einen zu erfassenden Bereich ("field of analysis" FoA) des Untergrunds möglichst homogen mit der emittierten breitbandigen Strahlung auszuleuchten.

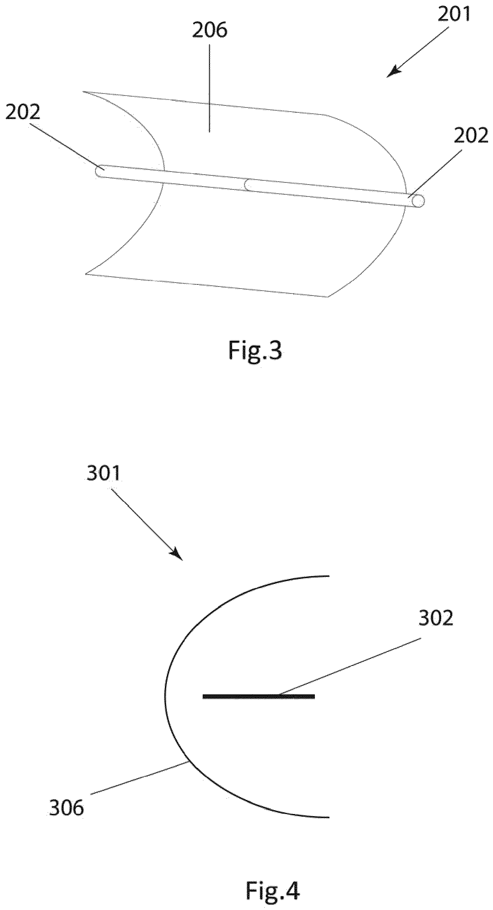

Bei besonders vorteilhaften Weiterbildungen ist dem zumindest einen breitbandigen Strahler in Emissionsrichtung eine steuer- und einstellbare Projektionsoptik zur Steuerung der Leuchtweite und/oder der Leuchttiefe der emittierten breitbandigen Strahlung nachgeschaltet. Die steuer- und einstellbare Projektionsoptik ermöglicht eine adaptive Anpassung der Leuchtweite und/oder der Leuchttiefe der emittierten breitbandigen Strahlung. Vorzugsweise umfasst die Projektionsoptik Spiegelelemente, da mit diesen Spiegelelementen wellenlängenabhängige Fehler bzw. Farbfehler minimiert werden und ein breiter Wellenlängenbereich abgedeckt ist. Zudem sind Projektionsoptiken basierend auf Spiegelelementen günstig in der Anschaffung und der Herstellung. Bei einer konkreten Ausführungsvariante, welche weiter unten in der Figur 3 dargestellt ist, kann die steuer- und einstellbare Projektionsoptik eine Kombination aus mehreren Spiegeln und einer Kollimationsoptik umfassen. Trotz der Vorteile des Einsatzes von Spiegelelementen können auch andere Projektionsoptiken und Optikelemente aus üblichen IR-transparenten Materialien (z.B. Saphir, Diamant, Germanium, Silizium, Zinkselenid, Magnesiumfluorid, Kaliumbromid) eingesetzt werden, wobei empfindliche, z.B. wasserlösliche oder hygroskopische IR-transparente Materialien wie Kaliumbromit in einer von schädlichen Umwelteinflüssen abgekapselten Baugruppe wie einem wasserdichten Gehäuse/Hülle untergebracht werden.

Bei bestimmten Varianten kann das Sensorsystem eine Mehrzahl an adaptiven Strahlungsemittern und/oder eine Mehrzahl an Strahlungsempfängern umfasst, welche jeweils unabhängig voneinander ansteuerbar sind. Die Mehrzahl an adaptiven Strahlungsemittern und/oder eine Mehrzahl an Strahlungsempfängern können beispielsweise als Array angeordnet sein. Die adaptiven Strahlungsemitter können jeweils auf die spezifische Wellenlänge bzw. den spezifischen Wellenlängenbereich verschiedener Oberflächenleitanalyten abgestimmt sein.

Bei besonders bevorzugten Varianten umfasst der mindestens eine adaptive Strahlungsemitter zumindest einen adaptiven Quantenkaskadenlaser (QC) und/oder zumindest einen adaptiven Diodenlaser. Derartige Laser werden beispielsweise von Hamamtsu (JP), Alpes Lasers (CH) oder dem Fraunhofer Institut (DE) angeboten. Die Quantenkaskadenlaser bzw. Diodenlaser sind derart abgestimmt, dass sie eine für einen zu erfassenden Oberflächenleitanalyten des Untergrunds spezifische Wellenlänge emittieren: Als wichtigste Leitanalyten sind zu nennen (jedoch nicht beschränkt auf diese): Bitumen (-CH₄, X= ca. 7,7 µm) als Leitanalyt für eine Asphaltstraße, Chlorophyll (-C=C-, X= ca. 6,21 µm; -OH, λ= ca. 2,99 µm) als Leitanalyt für die Vegetation am Straßenrand oder auf dem Untergrund, Titanoxid (λ= ca. 1-1,6 µm) als Leitanalyt für Fahrbahnstreifen und/oder Wasser als Leitanalyt für Nässe/Eis/Schnee auf dem Untergrund (H₂O, λ= ca. 6,3 µm).

Bei vorteilhaften Weiterbildungen kann dem mindestens einen breitbandigen Strahler und/oder dem mindestens einen adaptiven Strahlungsemitter in Abstrahlrichtung ein ansteuerbares Modulationselement zur Modulation der emittierten Strahlung nachgeschaltet sein. Das Modulationselement kann beispielsweise als verschwenkbarer Shutter oder als drehbares Farbrad zum Blockieren vorbestimmter Wellenlängen im VIS/IR-Bereich realisiert sein. Um zum Beispiel eine Unterscheidung zwischen der emittierten IR-Strahlung zum Sonnenlicht zu ermöglichen, kann das Modulationselement ein VIS-Sperrelement (VIS-Sperrfilter) zum Blockieren des von dem mindestens einen breitbandigen Strahler ausgestrahlten sichtbaren Lichts (VIS) sein.

Bei vorteilhaften Weiterbildungen ist der Strahlungsempfänger als ein adaptiver Strahlungsempfänger ausgebildet und dazu eingerichtet, die von dem Untergrund reflektierte Strahlung adaptiv zeitlich und örtlich aufgelöst zu detektieren. Mittels des adaptiven Strahlungsempfängers kann der zu erfassende Bereich ("field of analysis" FoA) des Untergrunds, von welchem die reflektierte Strahlung detektiert werden soll, insbesondere die von den ausgewählten Bereichen des Untergrunds reflektierte Strahlung gemäß dem erfindungsgemäßen Verfahren, entsprechend ausgewählt werden.

Die Oberflächenbeschaffenheitsangabe in Bezug auf den vor dem Kraftfahrzeug befindlichen Untergrund kann zumindest eine der folgenden Angaben umfassen: "befahrbarer Untergrund/Fahrbahn", "nicht befahrbarer Untergrund/Fahrbahn" "keine asphaltierte Fahrbahn", "asphaltierte Fahrbahn" , "nasse Fahrbahn", "Eis auf der Fahrbahn", "Schnee auf der Fahrbahn", "Hindernis auf der Fahrbahn", "aus Schotter aufgebaute oder geröllige Fahrbahn" wobei eine weitere Differenzierung in rundes, gebrochenes oder natürlich geformtes Geröll möglich ist, "pflanzliches Material auf der Fahrbahn", "mit feinen Steinkörnungen belegte Fahrbahn/Asphalt", beispielsweise Splitt oder Rollsplit, der weiter differenziert werden kann in Feinsplit mit einer Körnung von 2-32mm, künstlich erzeugten Splitt, überwiegend scharfkantigen Splitt und dergleichen, und "partiell mit feuchtem Erdreich bedeckte Fahrbahn/Asphalt", wie beispielsweise von landwirtschaftlichen Fahrzeugen auf der Fahrbahn/dem Asphalt hinterlassenes Erdreich oder Ackererde.

Die Oberflächenbeschaffenheitsangabe "befahrbarer Untergrund/Fahrbahn" bedeutet, dass der Untergrund bzw. die Fahrbahn von einem Kraftfahrzeug eine vertrauenswürdige und im Wesentlichen gefahrlos befahrbare Oberfläche besitzt und dass zudem genügend Platz vorhanden ist, um das Kraftfahrzeug auf dem Untergrund/Fahrbahn zu manövrieren. Ein befahrbarer Untergrund ist im Normalfall, jedoch nicht beschränkt darauf, eine asphaltierte Straße.

Bei der Oberflächenbeschaffenheitsangabe "pflanzliches Material auf der Fahrbahn" kann es sich beispielsweise um Grünbewuchs, Laub, Äste oder dergleichen handeln, z.B. um die Oberflächenbeschaffenheitsangabe "partiell mit feuchtem Laub flächig bedeckte Fahrbahn".

Die Oberflächenbeschaffenheitsangabe "Hindernis auf der Fahrbahn" umfasst beispielsweise Steine, Geröll, ein überfahrenes Tier, andere sich auf der Fahrbahn befindliche Verkehrsteilnehmer, Fahrzeugteile (z.B. nach einem Unfall), etc.

Die Oberflächenbeschaffenheitsangabe "asphaltierte Fahrbahn" (Asphaltstraße bzw. Straße im herkömmlichen Sinn) bedeutet, dass die Fahrbahn einen bestimmten Gehalt an Bitumen als Leitanalyt im Asphalt enthält. Ein sinnvoller Konzentrationsbereich von Bitumen im Asphalt kann insbesondere in einem Bereich von 2% -10% liegen, wobei der Rest Gestein ist. Falls die molekülspektroskopisch erfasste Bitumenkonzentration unter 2% liegt, befindet sich keine asphaltierte Straße vor dem bewegten Kraftfahrzeug, d.h. die Oberflächenbeschaffenheitsangabe ist in diesem Fall "keine asphaltierte Fahrbahn" oder "keine Fahrbahn".

Der Oberflächenleitanalyt des Untergrunds kann zumindest einer aus der Gruppe sein, welche besteht aus: Bitumen, Chlorophyll, Wasser, Eis, Schnee, Titandioxid.

Als wichtigste Oberflächenleitanalyten sind die folgenden, jedoch nicht beschränkt auf diese, zu nennen (Angabe einer primären Absorptionswellenlänge einer wesentlichen chemischen funktionalen Gruppe des Oberflächenleitanalyten für die Quantifizierung, in Zusammenspiel mit zusätzlichen Banden zur Abgrenzung von anderen Substanzen): Bitumen (-CH₃, X= ca. 7,7 µm) als Leitanalyt für eine Asphaltstraße, Chlorophyll (-C=C-, X= ca. 6,21 µm; -OH, λ= ca. 2,99 µm) als Leitanalyt für die Vegetation am Straßenrand oder auf dem Untergrund, Titanoxid (X= ca. 1-1,6 µm) als Leitanalyt für Fahrbahnstreifen und/oder Wasser als Leitanalyt für Nässe/Eis/Schnee auf dem Untergrund (H₂O, λ= ca. 6,3 µm).

Die FTIR-Spektralanalyse von Bitumen wurde beispielsweise von Hofko et al., 2018 beschrieben (Hofko et al, 2018, FTIR spectal analysis of bituminous binders: reproducibility and impact on ageing temperatur, Materials and Structures 51:45).

Holt und Jacobs (1955) beschrieben die IR-spektroskopische Messung von Chlorophyll und dessen Derivaten (Holt und Jacobs, 1955, Infra-red absorption spectra of chlorophylls and derivatives, Plant Physiol. 30(6):553-559); siehe auch Vernon & Seely, The Chlorophylls, Academic Press (1966).

Mittels einer bei molekülspektroskopischen Methoden in üblicher und hinlänglich bekannter Weise durchgeführten Auswertung von Bandüberlappungen und einer genauen Peakanalyse durch die Steuer- und Auswerteeinrichtung des Sensorsystems kann beispielsweise nicht nur die Anwesenheit von Wasser, sondern die zeitlich und örtlich aufgelöste Menge auf einer Fahrbahn sowie der Aggregatzustands des Wassers (feuchte Fahrbahn, Pfütze, "Aquaplaning", Eis, Hagel, Schnee, Match), gemessen werden, so dass eine Ableitung von Haft- und Reibwerten möglich ist und dies in der Steuerung des Kraftfahrzeugs berücksichtigt werden kann.

Weitere nützliche Oberflächenleitanalyten können sein: Schmieröl, Treibstoffe wie Benzin, Diesel, Batteriesäure, Elektrolyte aus Batterien/Akkumulatoren, Blut/Fell von überfahrenen Tieren, Holz, Laub, Papier, Objekte/Artikel aus Kunststoff wie Polyethylen (PE), Polypropylen (PP), Polyethylenterephthalat (PET), Acrylnitril-Butadien-Styrol (ABS), Schmieröl, Gummi, Ruß, Blech, lackiertes Blech. Ebenfalls ist es möglich, Steinschlag durch Vorliegen von mittelräumig (Durchmesser > 25 mm - 200 mm) ausgebreitetem Gestein mit hoher Feldspat-Konzentration auf der Fahrbahn/Asphalt zu bestimmten; hierbei kann speziell die Abwesenheit von Bitumen-spezifischen Analyten für die molekülspektroskopische Identifizierung von Steinschlag herangezogen werden, sofern rund um das Gestein/Steinschlag großräumig Asphalt vorherrscht.

Substanzspezifische VIS/IR-Wellenlängen bzw. Wellenlängenbereiche sowie VIS/IR-Fingerprint-Bereiche können, wie dem Fachmann hinlänglich bekannt ist, aus in der Fachwelt bekannten und anerkannten VIS/IR-Spektrum-Datenbanken/Libraries entnommen werden, z.B. www.ir-spectra.com, von Thermo Fisher Scientific ("Commercial Materials FT-IR Spectral Library", www.thermofisher.com), BIO-RAD (KnowItAll, www.bio-rad.com) oder aus dem Merck FT-IR Atlas, Wiley-VCH (1987).

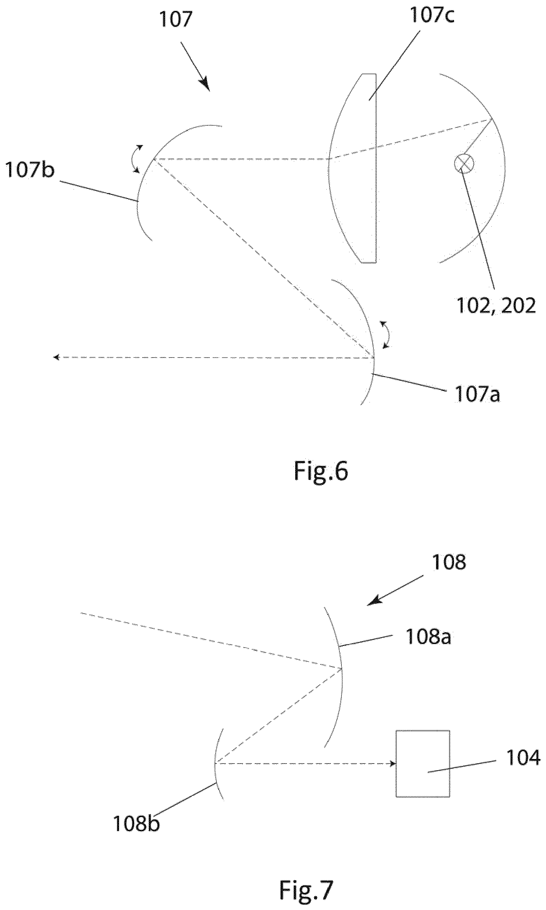

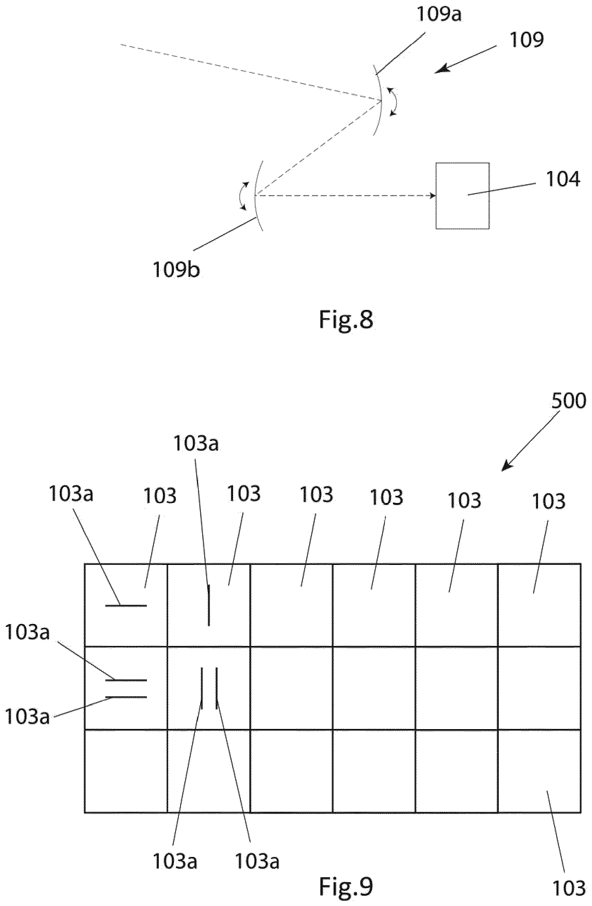

Ein das Fahrzeug steuernder "Analyten-Leitwert" setzt sich aus einzelnen Konzentrationen bzw. der lokalen Verteilung dieser Konzentrationen von anhand der spektralen Überblicksmessung des analysierten Messbereichs identifizierter Substanzen und der Mischung untereinander zusammen (d.h. qualitative Messung mittels Breitbandausleuchtung durch breitbandigen Strahler und Generieren sowie zeitlich und örtlich aufgelöste Erfassung von Spektralwerten und Generierung einer Übersichtsauswertung wie hierin beschrieben), wobei diesen Konzentrationen typische Bereiche zugeordnet sind. Ganz allgemein versteht man unter einem Analyt oder den Analyten diejenigen in einer Probe enthaltenen Stoffe, über die bei einer chemischen Analyse eine Aussage getroffen werden soll, d. h. welche analysiert werden sollen; als Matrix/Matrices werden diejenigen Bestandteile einer Probe bezeichnet, die nicht analysiert werden. Dabei kann sich der eigentliche Analyt bzw. die Analyten aus mehreren für den zu analysierenden Stoff typischen Substanzen zusammensetzen; z.B. in Bezug auf die vorliegende Erfindung enthält der Stoff Asphalt Bitumen als Gemenge von Kohlenwasserstoffen (beispielsweise aber nicht ausschließlich höhermolekulare Aliphaten und Aromaten sowie deren z.B.: sauerstoff- und stickstoffhaltige Derivate) und Gestein. Der das Fahrzeug steuernde Analyt/Analyten-Leitwert wird situativ anhand der identifizierten Substanzen vor der eigentlichen Quantifizierung erst gebildet, wobei das mit einer zweckmäßig angepassten örtlichen Auflösung zu geschehen hat (beispielsweise einer örtlichen Auflösung von horizontal (h) sowie vertical (v) von < 0,1°-2°). Dies erfolgt im ersten, qualitativen Analysenschritt, welcher unter Zuhilfenahme von eingespielten und eingelernten Datenbankeinträgen Peak- bzw. Spektren Dekonvulations- und Vergleichs(Klassifizierungs)-Vorgänge nach dem Stand der Technik umfasst (siehe z.B. bezüglich Wasser in verschiedenen Aggregatzuständen auf Asphalt: Jonsson et al., 2015, Road Surface Status Classification Using Spectral Analysis of NIR Camera Images, IEEE Sensors Journal 15(3): 1641 - 1656; siehe insbesondere Fig. 7 und 8). Durch entsprechende Einlern- sowie Kalibriervorgänge werden dabei insbesondere in Verbindung mit wechselnd intensiver Beleuchtung (Modulation) neben den substanzspezifischen Absorptionsvorgängen auch die unterschiedlichen Streuwirkungen der aktuellen Oberfläche, z.B. der Straße, berücksichtigt.

Für die Bestimmung der Einzelkonzentrationen des detektierten zusammengesetzten Analyten, werden gemäß dem erfindungsgemäßen Verfahren jeweils günstige Wellenlängenbereiche ausgewählt und mit den spezifischen, adaptiven Strahlungsemittern mit einer für eine gesicherte Quantifizierung, auch in größeren Distanzen und bei höheren Fahrgeschwindigkeiten, ausreichend hohen Intensität bestrahlt.

Das Sensorsystem gemäß der Erfindung kann ferner noch mit weiteren Zusatzkomponenten und -funktionen ausgestattet sein. Beispielsweise kann das Sensorsystem eine Kamera für Licht im sichtbaren Bereich mit z.B. CMOS Sensor und 3 Farben Filterung (Bayer-Fotosensor) aufweisen, um eine Verknüpfung von z.B. 3D Farbbildern (erhalten durch Stereoskopie oder Odometrie) mit den molekülspektroskopisch ermittelten Subtanzdaten zu erreichen. Ferner können die molekülspektroskopisch ermittelten Subtanzdaten auch mit 3D Bildern aus Thermografieaufnahmen aus mehreren Richtungen kombiniert werden.

Darüber hinaus ist ein gezielter Einsatz von mehreren spezifischen Beleuchtungen (mehrere Wellenlängen) sowie Dimmung/Verstärkung der Basisbeleuchtung (auch Verschiebung des Spektrums durch Emittertemperaturanpassung) möglich. Beispielsweise kann dies mittels (auch spektral aufgelöste) Modulation durch eine regelmäßige Beleuchtungsintensitätsvariation erfolgen. Eine weitere Möglichkeit ist der Einsatz einer Flash-Beleuchtung in Form einer sehr intensiven Kurzzeitbeleuchtung, die z.B. über Werte hinausgehen kann, welche auf Dauer zulässig sind. Die Modulation/Flash-Beleuchtung dient der Kompensation der Umgebungsbeleuchtung und der Klärung von aufgrund mehrfacher Peaküberlagerung unklaren Substanzzuordnungen.

Um das Sensorsystem der vorliegenden Erfindung vor äußeren Einflüssen wie Verschmutzung, Chemikalien, Steinschlägen und dergleichen zu schützen, ist es von Vorteil, wenn das Sensorsystem ferner ein die Baukompenenten beherbergendes Sensorikgehäuse umfasst. Das Sensorikgehäuse besitzt nach an sich bekannter Art eine frontseitige Öffnung und ist zweckmäßigerweise fix im Außenbereich des Kraftfahrzeugs, vorzugsweise in der Kraftfahrzeugvorderfront, eingebaut.

Das Sensorikgehäuse umfasst nach an sich bekannten Bauprinzipien eine das Sensorikgehäuse nach außen hin verschließbare Abdeckscheibe. Der Ausdruck "nach außen hin verschließbares Sensorikgehäuse" bedeutet in diesem Zusammenhang, dass das Sensorikgehäuse und die Abdeckscheibe in einer Weise gestaltet und dimensionsiert sind, dass die von dem breitbandigen Strahler bzw. dem mindestens einen Strahlungsemitter im VIS/IR- bzw. im IR-Wellenlängenspektrum emittierte Strahlung sowie die von dem mindestens einen Strahlungsempfänger detektierte Strahlung durch die Abdeckscheibe hindurch treten kann. Die Geometrie und die Oberfläche der Abdeckscheibe können so ausgeführt werden, dass möglichst wenig Schmutzpartikel im Fahrbetrieb anhaften; die Wahl bezüglich der Geometrie und der Oberflächenbeschaffenheit von Abdeckscheiben sind beispielsweise aus der Scheinwerfertechnik bekannt und können auf Abdeckscheiben von Sensorikgehäusen eines erfindungsgemäßen Sensorsystems, die in den Außenbereich von Kraftfahrzeugen eingebaut werden, angewendet werden. Aufgrund der Vielfalt und der sinnvollen Verteilung der einzelnen Bauelemente (Strahler, Emitter, Empfänger) ergibt sich eine größerflächige Abdeckscheibe, die einen entsprechend weiten Transparenzbereich aufweisen muss. Ein Fachmann auf dem Gebiet ist ohne Zweifel in der Lage, eine geeignete Abdeckscheibe zu wählen. So muss die Abdeckscheibe für VIS- und IR-Licht, alternativ nur für IR-Licht, durchlässig sein. Die verfügbaren IR-durchlässigen Materialien sind größtenteils harte und teilweise witterungsempfindliche Materialien (z.B. Saphier, Chalkogenidgläser [GeₓAs_{y}Se_{z}], Zn(S, Se), KRS-5, KRS-6, Yttrium-Aluminium-Granat (YAG), ZrO₂:Y). Es ist daher für die Anwendung in Kraftfahrzeugen von Vorteil, diese IR-durchlässigen Materialien in geometrischer Anordnung (z.B. wabenförmig) in eine zähere bzw. elastische Matrix, z.B. aus IR-intransparentem Polycarbonat oder VIS/IRstrahlungsdurchlässigem Silikon, einzubetten.

Um die Funktionalität der Baukomponenten über einen längeren Zeitraum mit unterschiedlichen äußeren Einflüssen aufrecht zu erhalten, ist es wichtig, eine möglichst reine Abdeckoberfläche sicherzustellen. Für geringe Schmutzanhaftung kann es daher vorteilhaft sein, optisch gut transparente Diamantschichten (hergestellt z.B. mittels chemischer Gasphasenabscheidung (CVD)) einzusetzen, da diese chemisch weitgehend inert und zusätzlich einen geringen Reibungskoeffizienten aufweisen. Diese Funktionalität kann auch durch *diamond-like-carbon* (DLC)- bzw. Diamantbeschichtungen auf z.B. Saphirfenstersustraten erzielt werden.

Ferner kann die Abdeckscheibe innenseitig mit einer bei Kraftfahrzeugscheinwerferabdeckscheiben standardmäßig aufgebrachten Antifog-Beschichtung versehen werden. Außenseitig der Abdeckscheibe kann z.B. auch eine Reinigungsvorrichtung wie sie in an sich bekannter Weise aus der Scheinwerfertechnik bekannt ist vorgesehen sein.

Ferner kann die Abdeckscheibe bzw. das gesamte erfindungsgemäße Sensorsystem auch mit einer ebenfalls aus der Scheinwerfertechnik bekannten Temperaturregelung zwecks Thermomanagement ausgestattet sein.

Steuerungskonzepte können vorsehen, dass der Straßenerhalter (z.B. über Funk oder sonstige Kommunikationswege) streckenspezifisch Signaturdaten für die Oberflächenleitanalyten vorgibt, welche von der Steuerungs- und Auswerteeinrichtung bei der Auswertung der mittels des erfindungsgemäßen Sensorsystems erfassten Spektraldaten und schlussendlich in der Steuerung des Kraftfahrzeugs berücksichtigt werden.

Als vorteilhafte Erweiterungsmöglichkeit des erfindungsgemäßen Verfahrens kann es auch vorgesehen sein, Wettereinflüsse und Wetterzustände durch Referenzierungsmessungen gegen den Himmel vorzunehmen und in der Auswertung der mittels des erfindungsgemäßen Sensorsystems erfassten Spektraldaten und schlussendlich in der Steuerung des Kraftfahrzeugs zu berücksichtigen.

Ein weiterer Gegenstand der Erfindung ist ein Kraftfahrzeug, gemäß Anspruch 13, umfassend ein Kraftfahrzeugsteuerungssystem und ein erfindungsgemäßes Sensorsystem wie hierin beschrieben, wobei das Kraftfahrzeugsteuerungssystem dazu eingerichtet ist, zumindest eine von dem Sensorsystem molekülspektroskopisch bestimmte und an das Kraftfahrzeugsteuerungssystem weitergeleitete örtlich und zeitlich aufgelöste Oberflächenbeschaffenheitsangabe des vor dem Kraftfahrzeugs befindlichen Untergrunds im Fahrbetrieb bzw. in der Steuerung der Fahrmanöver des Kraftfahrzeugs zu berücksichtigen. Das Kraftfahrzeug ist vorzugsweise ein selbstfahrendes Kraftfahrzeug. Das erfindungsgemäße Sensorsystem und das erfindungsgemäße Verfahren kommen daher vorzugsweise in einem selbstfahrenden Kraftfahrzeug zum Einsatz.

Vorzugsweise ist das Sensorsystem an einem Außenbereich der Kraftfahrzeugvorderfront des Kraftfahrzeugs montiert. Der Ausdruck "an einem Außenbereich der Kraftfahrzeugvorderfront des Kraftfahrzeugs montiert" umfasst jegliche Möglichkeit der Befestigung des Sensorsystem in oder an der Kraftfahrzeugvorderfront des Kraftfahrzeugs, beispielsweise eine Montage an der Außengeometrie oder ein Einbau des Moduls im Außenbereich ähnlich einem Kraftfahrzeugscheinwerfer. Um den hohen Designansprüchen von Käufern/Kunden zu entsprechen, wird das Sensorsystem vorzugsweise in einer Art und Weise in der Kraftfahrzeugfront integriert, dass sich dieses wenig bis gar nicht störend auf die Ästhetik des Kraftfahrzeugs auswirkt.

Der Begriff "Kraftfahrzeug" (KFZ) wie hierin verwendet bezieht sich auf mehrspurige motorisierte landgebundene Fahrzeuge wie PKWs, LKWs und dergleichen. Wie erwähnt, handelt es sich bei dem Kraftfahrzeug vorzugsweise um ein selbstfahrendes Kraftfahrzeug. Der Begriff "selbstfahrendes Kraftfahrzeug" umfasst sowohl vollständig autonom betriebene Kraftfahrzeuge als auch teilweise autonom betriebene Kraftfahrzeuge. Teilweise autonom betriebene Kraftfahrzeuge sind solche, die neben dem normalen Fahrbetrieb durch einen Fahrer auch über einen autonomen und den Fahrer entlastenden Selbstfahrmodus verfügen. Die Erfindung samt weiterer Vorzüge wird im Folgenden anhand von nicht einschränkenden Beispielen und beiliegenden Zeichnungen näher beschrieben, wobei die Zeichnungen zeigen:
**Fig. 1** zeigt eine schematische Darstellung des der Erfindung zu Grunde liegenden Prinzips,
**Fig. 2** zeigt eine schematische Darstellung eines Sensorsystems gemäß der Erfindung,
**Fig. 3** zeigt eine perspektivische Darstellung einer Ausführungsvariante für eine Sendeeinheit mit zwei stabförmigen breitbandigen Strahlern,
**Fig. 4** zeigt einen Querschnitt einer weiteren Ausführungsvariante für eine Sendeeinheit mit einem stabförmigen breitbandigen Strahler,
**Fig. 5** zeigt eine erste Variante für eine adaptive Projektionsoptik zur Steuerung der Leuchtweite und/oder der Leuchttiefe eines breitbandigen Strahlers,
**Fig. 6** zeigt eine weitere Variante für eine adaptive Projektionsoptik zur Steuerung der Leuchtweite und/oder der Leuchttiefe eines breitbandigen Strahlers,
**Fig. 7** zeigt eine erste Variante für eine Empfangsoptik für einen Strahlungsempfänger,
**Fig. 8** zeigt eine zweite Variante für eine Empfangsoptik für einen Strahlungsempfänger,
**Fig. 9** zeigt eine Array-artige Anordnung von adaptiven Strahlungsemittern,
**Fig. 10** zeigt ein Flussdiagramm, in welchem ein Verfahren gemäß der Erfindung dargestellt ist,
**Fig. 11** zeigt ein Flussdiagramm zur Abfrage der Steuerung eines selbstfahrenden Kraftfahrzeugs, und
**Fig. 12** zeigt ein Flussdiagramm, in welchem der Ablauf des Dimmens einer Sendeeinheit umfassend breitbandige Strahler näher erläutert ist.

Es versteht sich, dass die hier beschriebenen Ausführungsformen lediglich der Illustration dienen und nicht als für die Erfindung einschränkend aufzufassen sind; vielmehr fallen unter den Schutzbereich der Erfindung sämtliche Ausgestaltungen, die der Fachmann anhand der Beschreibung finden kann, wobei der Schutzbereich durch die Ansprüche festgelegt ist.

In den Figuren werden für gleiche oder vergleichbare Elemente zum Zwecke der einfacheren Erläuterung und Darstellung gleiche Bezugszeichen verwendet. Die in den Ansprüchen verwendeten Bezugszeichen sollen ferner lediglich die Lesbarkeit der Ansprüche und das Verständnis der Erfindung erleichtern und haben keinesfalls einen den Schutzumfang der Erfindung beeinträchtigenden Charakter.

### FIGURENBESCHREIBUNG

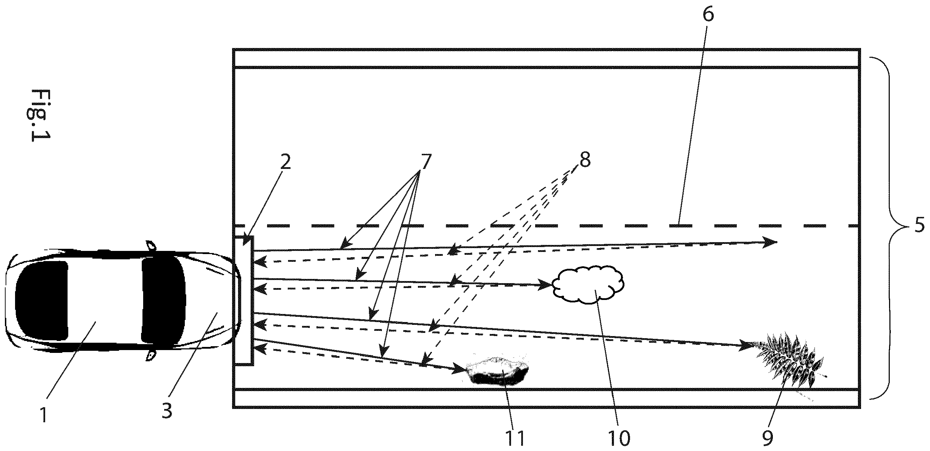

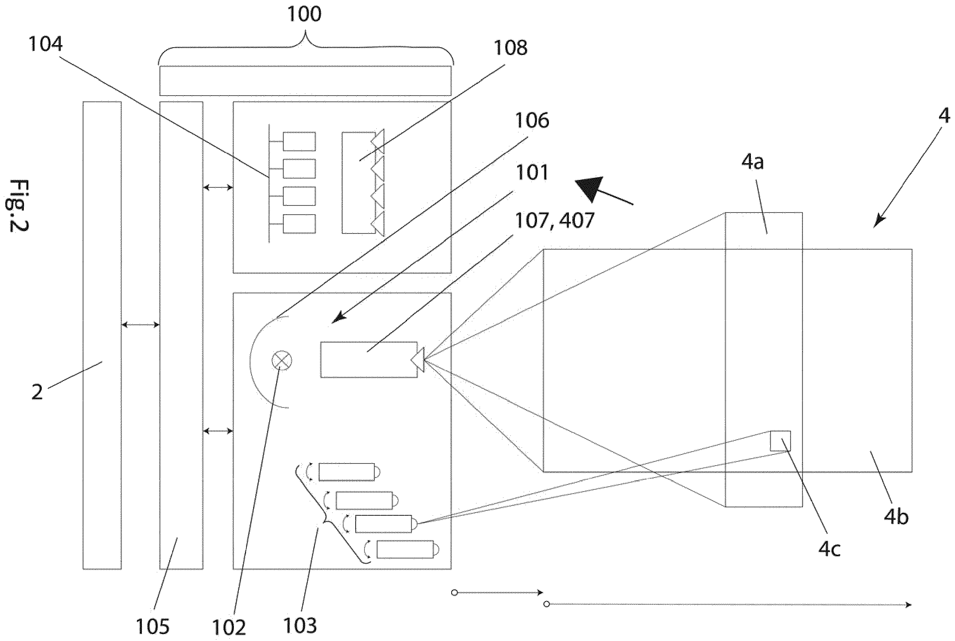

In **Fig. 1** ist eine schematische Darstellung des der Erfindung zu Grunde liegenden Prinzips veranschaulicht. Die Fig. 1 zeigt ein Kraftfahrzeug **1** mit einem (in Fig. 1 nicht eingezeichneten; siehe hierzu jedoch Fig. 2) Kraftfahrzeugsteuerungssystem **2** und einem in der Kraftfahrzeugvorderfront **3** eingebauten erfindungsgemäßen Sensorsystem 100. Das Sensorsystem 100 ist zur molekülspektroskopischen Bestimmung der Oberflächenbeschaffenheit eines vor dem Kraftfahrzeug 1 befindlichen Untergrund **4,** im vorliegenden Beispiel eine zweispurige Asphaltstraße **5** mit einer Mittelstreifenmarkierung zur Fahrbahneinteilung **6,** eingerichtet. Das Sensorsystem 100 ist, wie weiter unten zu Fig. 2 im Detail erläutert wird, mittels einer speziellen Kombination aus breitbandigem Strahler(n) und adaptiven Strahlungsemitter(n) dazu eingerichtet, Strahlung im VIS-IR-Wellenlängenspektrum oder im IR-Wellenlängenspektrum auf den Untergrund 4 zu emittieren (gesendete Analysespektren 7), die von dem Untergrund 4 reflektierte Strahlung zu empfangen (empfangene, substanzspezifische Spektren **8),** die so erhaltenen substanzspezifischen Spektraldaten auszuwerten und anhand dieser Spektraldaten zeitlich und örtlich aufgelöste Angaben in Bezug auf die Oberflächenbeschaffenheit des vor dem Kraftfahrzeug 1 befindlichen Untergrunds 4 zu erhalten. Wie in Fig. 1 schematisch dargestellt ist, kann die mittels des Sensorsystems 100 bestimmte substanzspezifische Oberflächenbeschaffenheit des vor dem Kraftfahrzeug 1 befindlichen Untergrunds 4 zeitlich und örtlich aufgelöst anhand von typischen Leitanalyten bestimmt werden: beispielsweise die Asphaltstraße 5 anhand des Bitumens im Asphalt, Pflanzenmaterial **9** am Fahrbahnrand oder auf der Fahrbahn anhand des Chlorophylls, Wasser **10** auf der Fahrbahn in Form von Nässe, Eis oder Schnee, Hindernisse **11** wie z.B. Steine auf der Fahrbahn, oder Fahrbahnmarkierungen wie z.B. dem Mittelstreifen 6 anhand von Titanoxid. Bei dem Kraftfahrzeug 1 handelt es sich um ein vollständig oder teilweise selbstfahrendes Kraftfahrzeug. Das Kraftfahrzeugsteuerungssystem 2 des Kraftfahrzeugs 1 ist dazu eingerichtet, zumindest eine von dem Sensorsystem 100 molekülspektroskopisch bestimmte und an das Kraftfahrzeugsteuerungssystems weitergeleitete örtlich und zeitlich aufgelöste Oberflächenbeschaffenheitsangabe des vor dem Kraftfahrzeugs 1 befindlichen Untergrunds 4 im Fahrbetrieb bzw. in der Steuerung der Fahrmanöver des Kraftfahrzeugs 1 zu berücksichtigen. Wie in Fig. 1 gezeigt ist das Sensorsystem 100 in der Kraftfahrzeugvorderfront 3 des Kraftfahrzeugs 1 montiert. Um den hohen Designansprüchen von Käufern/Kunden zu entsprechen, wird das Sensorsystem 100 vorzugsweise in einer Art und Weise in der Kraftfahrzeugfront 3 integriert, dass sich dieses wenig bis gar nicht störend auf die Ästhetik des Kraftfahrzeugs auswirkt.

**Fig. 2** zeigt eine schematische Darstellung des erfindungsgemäßen Sensorsystems 100 aus Fig. 1. Das Sensorsystem ist zur molekülspektroskopischen Bestimmung der Oberflächenbeschaffenheit des vor einem Kraftfahrzeug 1, insbesondere selbstfahrenden Kraftfahrzeug 1, befindlichen Untergrunds 4 eingerichtet (siehe Fig. 1).

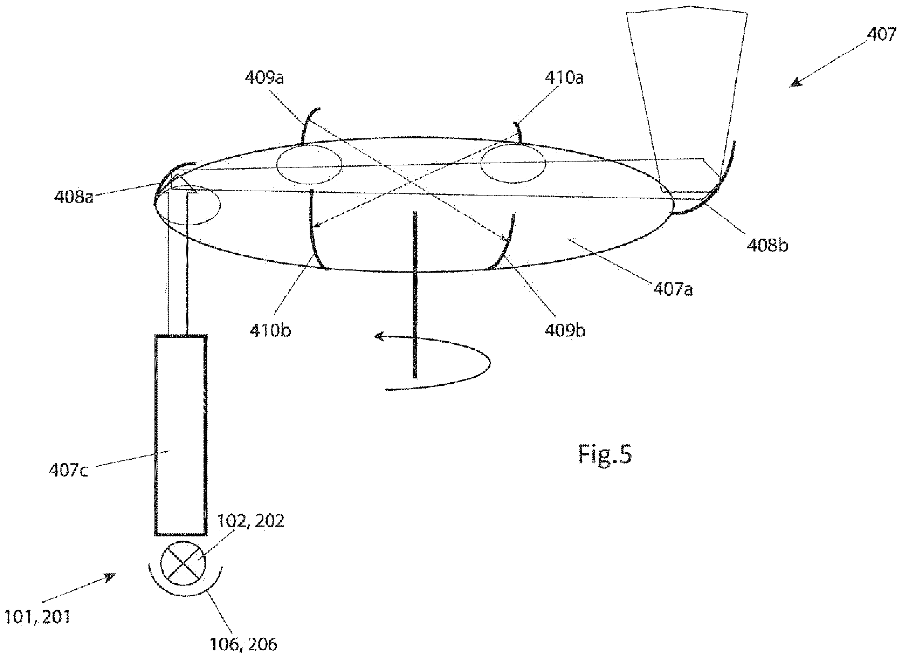

Das Sensorsystem 100 weist eine Sendeeinheit **101** umfassend einen breitbandigen Strahler **102** auf, der dazu eingerichtet ist, breitbandige Strahlung im VIS/IR-Wellenlängenspektrum oder im IR-Wellenlängenspektrum auf einen vor dem Kraftfahrzeug 1 befindlichen Untergrund 4 zu emittieren. Die in Fig. 2 dargestellte Sendeeinheit 101 umfasst einen breitbandigen Strahler 102, es wird einem Fachmann jedoch klar sein, dass die Sendeeinheit 101 mehr als einen breitbandigen Strahler 102 aufweisen kann. Die Sendeeinheit 101 umfasst außerdem einen elliptischen Reflektor **106,** welcher dazu eingerichtet ist, die von dem breitbandigen Strahler 102 emittierte VIS/IR-Strahlung auf den vor dem Kraftfahrzeug 1 befindlichen Untergrund 4 zu reflektieren. Der Reflektor 106 hat die Aufgabe, die von dem breitbandigen Strahler 102 emittierte breitbandige Strahlung möglichst vollständig zu erfassen und nach vorne, d.h. in Richtung des zu analysierenden Untergrunds 4 vor dem Kraftfahrzeug 1, auszurichten. Ziel ist es, einen zu erfassenden Bereich ("field of analysis" FoA) des Untergrunds 4 möglichst homogen mit der emittierten breitbandigen Strahlung auszuleuchten. Dem breitbandigen Strahler 102 ist in Emissionsrichtung eine steuer- und einstellbare Projektionsoptik (siehe Projektionsoptik **107** aus Fig. 6 bzw. Projektionsoptik **407** aus Fig. 5) zur Steuerung der Leuchtweite und/oder der Leuchttiefe der emittierten breitbandigen Strahlung nachgeschaltet. Die steuer- und einstellbare Projektionsoptik 107, 407 ermöglicht eine adaptive Anpassung der Leuchtweite und/oder der Leuchttiefe der emittierten breitbandigen Strahlung. In der Fig. 2 sind zum Zwecke der Veranschaulichung zwei von dem breitbandigen Strahler beleuchtete Bereiche **4a** und **4b** mit unterschiedlicher Leuchtweite und Leuchttiefe dargestellt. Ein spezifisches Ausführungsbeispiel für eine Projektionsoptik 107 bzw. eine Projektionsoptik 407 ist in der Fig. 6 bzw. der Fig. 5 gezeigt und weiter unten beschrieben.

Das Sensorsystem 100 umfasst ferner eine Mehrzahl an adaptiven Strahlungsemittern **103,** die dazu eingerichtet sind, eine adaptive Strahlung mit zumindest einer/einem für zumindest einen Oberflächenleitanalyten des Untergrunds spezifischen Wellenlänge/Wellenlängenbereich zu erzeugen und auf den vor dem Kraftfahrzeug 1 befindlichen Untergrund 4 zu emittieren, wobei die Wellenlänge bzw. der Wellenlängenbereich der von dem mindestens einen adaptiven Strahlungsemitter 103 emittierten adaptiven Strahlung im Wellenlängenspektrum der von dem breitbandigen Strahler 102 emittierten breitbandigen Strahlung liegt. Die adaptiven Strahlungsemitter 103 sind jeweils unabhängig voneinander ansteuerbar. Das in Fig. 2 gezeigte Sensorsystem 100 umfasst vier Strahlungsemitter 103, es wird einem Fachmann jedoch klar sein, dass das Sensorsystem 100 mehr oder weniger als vier Strahlungsemitter 103, jedenfalls jedoch zumindest einen Strahlungsemitter 103, aufweisen kann. Bei vorteilhaften Varianten können die adaptiven Strahlungsemitter 103 zumindest einen adaptiven Quantenkaskadenlaser (QC) und/oder zumindest einen adaptiven Diodenlaser umfassen. Derartige Laser werden beispielsweise von Hamamtsu (JP), Alpes Lasers (CH) oder dem Fraunhofer Institut (DE) angeboten. Die Quantenkaskadenlaser bzw. Diodenlaser sind derart abgestimmt, dass sie eine für einen zu erfassenden Oberflächenleitanalyten des Untergrunds spezifische Wellenlänge emittieren: Als wichtigste Leitanalyten sind zu nennen (jedoch nicht beschränkt auf diese): Bitumen (-CH₄, X= ca. 7,7 µm) als Leitanalyt für eine Asphaltstraße, Chlorophyll (-C=C-, X= ca. 6,21 µm; -OH, λ= ca. 2,99 µm) als Leitanalyt für die Vegetation am Straßenrand oder auf dem Untergrund, Titanoxid (X= ca. 1-1,6 µm) als Leitanalyt für Fahrbahnstreifen und/oder Wasser als Leitanalyt für Nässe/Eis/Schnee auf dem Untergrund (H₂O, λ= ca. 6,3 µm). Die adaptiven Strahlungsemitter 103 können jeweils auf die spezifische Wellenlänge bzw. den spezifischen Wellenlängenbereich verschiedener Oberflächenleitanalyten abgestimmt sein. Wie hierin im Zusammenhang mit dem erfindungsgemäßen Verfahren im Detail beschrieben werden emittieren die adaptiven Strahlungsemitter 103 adaptiven Strahlung mit zumindest einer/einem für den zumindest einen zu erwartenden Oberflächenleitanalyten spezifischen Wellenlänge/Wellenlängenbereich auf vor dem Kraftfahrzeug 1 befindlichen ausgewählten Bereiche **4c** des Untergrunds 4, wobei die Wellenlänge bzw. der Wellenlängenbereich der von dem mindestens einen adaptiven Strahlungsemitter emittierten Strahlung im Wellenlängenspektrum der von dem breitbandigen Strahler emittierten breitbandigen Strahlung liegt. Der von dem adaptiven Strahlungsemitter 103 beleuchtete ausgewählte Bereich 4c liegt innerhalb der von dem breitbandigen Strahler 102 ausgeleuchteten Bereich 4a bzw. 4b.

Darüber hinaus umfasst das Sensorsystem 100 eine Mehrzahl an Strahlungsempfängern **104,** die dazu eingerichtet die, die von dem Untergrund reflektierte Strahlung örtlich und zeitlich aufgelöst zu detektieren. Das in der Fig. 2 gezeigte Sensorsystem 100 hat vier Strahlungsempfänger 104, es wird einem Fachmann jedoch klar sein, dass das Sensorsystem 100 mehr oder weniger als vier Strahlungsempfänger 104, jedenfalls jedoch zumindest einen Strahlungsempfänger 104, aufweisen kann. Den Strahlungsempfängern 104 ist eine Empfangsoptik 108 zugeordnet. **Fig. 7** zeigt eine erste Variante für eine Empfangsoptik **108** für einen Strahlungsempfänger 104; **Fig. 8** zeigt eine weitere Variante für eine Empfangsoptik **109,** um einen adaptiven Strahlungsempfänger 104 zu realisieren (siehe Beschreibung zu Fig. 7 und Fig. 8 weiter unten).

Das Sensorsystem 101 umfasst ferner eine Steuerungs- und Auswerteeinrichtung **105,** welche zur Steuerung der Sendeeinheit 101, des mindestens einen adaptiven Strahlungsemitters 103 und des mindestens einen Strahlungsempfänger 104 eingerichtet und an ein Kraftfahrzeugsteuerungssystem 2 des Kraftfahrzeugs 1 (siehe Fig. 1) anschließbar ist, und welche ferner dazu eingerichtet ist, die von dem mindestens einen Strahlungsempfänger 104 detektierte Strahlung zum Erhalt von Spektraldaten auszuwerten, die erhaltenen Spektraldaten nach dem zumindest einen zu erwartenden Oberflächenleitanalyten zu klassifizieren, sowie die erhaltenen Spektraldaten mit vorgebbaren Oberflächenleitanalyten-Soll-Spektraldaten zum Erhalt zumindest einer örtlich und zeitlich aufgelösten Oberflächenbeschaffenheitsangabe des vor dem Kraftfahrzeug 1 befindlichen Untergrunds 4 zu vergleichen.

Der breitbandige Strahler 102 ist vorzugsweise dazu eingerichtet, breitbandige Strahlung mit einem Wellenlängenspektrum von 0,4 µm - 20 µm, mehr bevorzugt mit einem Wellenlängenspektrum von 0,8 µm - 10 µm, auf den vor dem Kraftfahrzeug 1 befindlichen Untergrund 4 zu emittieren und die zumindest eine Wellenlänge bzw. der zumindest eine Wellenlängenbereich der von den adaptiven Strahlungsemittern 103 emittierten Strahlung liegt vorzugsweise in einem Wellenlängenbereich von 0,4 µm - 20 µm, mehr bevorzugt in einem Wellenlängenbereich von 0,8 µm - 10 µm.

Mittels des breitbandigen Strahlers 102 wird wie oben im Detail bereits beschrieben eine breitbandige Strahlung auf den Untergrund 4 emittiert und durch zeitlich und örtlich aufgelöste Detektion der von dem Untergrund reflektierten Strahlung und Auswertung derselben eine qualitative Übersichtsauswertung der Oberflächenbeschafftenheit des Untergrunds 4 erhalten. Mittels der auf der breitbandigen Strahlung basierenden qualitativen Übersichtsauswertung sowie den Oberflächenleitanalyten-spezifischen quantitativen Spektraldaten werden zeitlich und örtlich aufgelöste Oberflächenbeschaffenheitsangaben des vor dem Kraftfahrzeug 1 befindlichen Untergrunds 4 erhalten. Diese Oberflächenbeschaffenheitsangaben werden von der Steuer- und Auswerteeinrichtung 105 des erfindungsgemäßen Sensorsystems 100 an das Kraftfahrzeugsteuerungssystem 2 des Kraftfahrzeugs 1 weitergeleitet. Das Kraftfahrzeugsteuerungssystem ist dazu eingerichtet, die zumindest eine von dem Sensorsystem 100 molekülspektroskopisch bestimmte und an das Kraftfahrzeugsteuerungssystems weitergeleitete örtlich und zeitlich aufgelöste Oberflächenbeschaffenheitsangabe des vor dem Kraftfahrzeug 1 befindlichen Untergrunds 4 im Fahrbetrieb bzw. in der Steuerung der Fahrmanöver des Kraftfahrzeugs 1 zu berücksichtigen, so dass eine weitgehend autonome Steuerung des Kraftfahrzeugs 1 möglich ist. Die Oberflächenbeschaffenheitsangaben werden somit anhand der gemessenen substanzspezifischen Spektren und der Konzentration relevanter vorbestimmter Oberflächenleitanalyten (zB. Bitumen, Chlorophyll, Wasser in Form von Eis, Schnee, Nässe) des Untergrunds bestimmt und ermöglichen daher eine autonome Steuerung des Kraftfahrzeugs 1.

Bei vorteilhaften Weiterbildungen kann dem mindestens einen breitbandigen Strahler 102 und/oder dem mindestens einen adaptiven Strahlungsemitter 103 in Abstrahlrichtung ein in den Figuren nicht näher dargestelltes ansteuerbares Modulationselement zur Modulation der emittierten Strahlung nachgeschaltet sein. Das Modulationselement kann beispielsweise als verschwenkbarer Shutter oder als drehbares Farbrad zum Blockieren vorbestimmter Wellenlängen im VIS/IR-Bereich realisiert sein. Derartige Modulationselemente sind dem einschlägigen Fachmann bekannt. Um zum Beispiel eine Unterscheidung zwischen der emittierten IR-Strahlung zum Sonnenlicht zu ermöglichen, kann das Modulationselement ein VIS-Sperrelement (VIS-Sperrfilter) zum Blockieren des von dem mindestens einen breitbandigen Strahler ausgestrahlten sichtbaren Lichts (VIS) sein.

**Fig. 3** zeigt eine perspektivische Darstellung einer vorteilhaften Ausführungsvariante für eine Sendeeinheit **201** mit zwei stabförmigen breitbandigen Strahlern **202.** Die Sendeeinheit 201 umfasst erfindungsgemäß zwei breitbandige Strahler 202 identischer Bauart, welche jeweils eine stabförmige Form aufweisen, an jeweils einer Stirnseite miteinander verbunden sind und die jeweils unabhängig voneinander ansteuerbar sind. Im gezeigten Beispiel aus Fig. 3 sind die zwei breitbandigen Strahler 202 mit ihrer Längsausdehnung an der Breitenausdehnung der Fahrzeugfront ausgerichtet. Die Sendeeinheit 201 umfasst außerdem einen elliptischen Reflektor **206,** welcher dazu eingerichtet ist, die von den breitbandigen Strahlern 202 emittierte VIS/IR-Strahlung auf den vor einem Kraftfahrzeug (z.B. Kraftfahrzeug 1 aus Fig. 1) befindlichen Untergrund 4 (siehe Fig. 1 und Fig. 2) zu reflektieren. Durch das Vorsehen von zwei oder mehr breitbandigen Strahlern (in Fig. 3 genau 2 breitbandige Strahler) identischer Bauart, ist es möglich, die insgesamt von den breitbandigen Strahlern 202 emittierte breitbandigen Strahlung zu dimmen, indem die breitbandigen Strahler 202 jeweils unabhängig voneinander aus- oder eingeschalten werden, gegebenenfalls unter Anpassen der Leuchttiefe und/oder der Leuchtweite der insgesamt emittierten breitbandigen Strahlung. Das Dimmen der insgesamt von den breitbandigen Strahlern 202 emittierten breitbandigen Strahlung ermöglicht ein Wegfahren des Kraftfahrzeugs, ohne durch die Wärmeentwicklung, die durch die breitbandige Strahlung entsteht, Objekte zu beschädigen oder zu gefährden. Es ist nicht möglich, einen einzelnen der breitbandigen Strahler 202 an sich zu dimmen, da sich ansonsten die spektrale Abstrahlung verändern würde.

**Fig. 4** zeigt einen Querschnitt durch eine weitere Ausführungsvariante einer Sendeeinheit **301** mit einem stabförmigen breitbandigen Strahler **302.** Die Sendeeinheit 301 umfasst außerdem einen elliptischen Reflektor **306,** welcher dazu eingerichtet ist, die von dem breitbandigen Strahler 302 emittierte VIS/IR-Strahlung auf den vor einem Kraftfahrzeug (z.B. Kraftfahrzeug 1 aus Fig. 1) befindlichen Untergrund 4 (siehe Fig. 1 und Fig. 2) zu reflektieren. Im gezeigten Beispiel aus Fig. 4 ist der breitbandige Strahler 302 mit seiner Längsausdehnung in Richtung der Fortbewegung des Kraftfahrzeugs ausgerichtet. Die in Fig. 4 gezeigte Sendeeinheit 301 umfasst nur einen stabförmigen breitbandigen Strahler 302. Einem Fachmann wird jedoch klar sein, dass - in Analogie zur Sendeinheit 201 aus Fig. 3 - zwei oder mehr breitbandige Strahler 302 identischer Bauart vorgesehen sein könnten, die jeweils unabhängig voneinander ansteuerbar sind. Wie oben beschreiben ermöglicht das Vorsehen von zwei oder mehr breitbandigen Strahlern identischer Bauart ein Dimmen der insgesamt von den breitbandigen Strahlern 302 emittierten breitbandigen Strahlung, indem die breitbandigen Strahler 302 jeweils unabhängig voneinander aus- oder eingeschalten werden, gegebenenfalls unter Anpassen der Leuchttiefe und/oder der Leuchtweite der insgesamt emittierten breitbandigen Strahlung.

**Fig. 5** zeigt eine steuer- und einstellbare adaptive Projektionsoptik **407** zur Steuerung der Leuchtweite und/oder der Leuchttiefe eines breitbandigen Strahlers 102, 202 einer Sendeeinheit 101, 201 (vgl. Fig. 1 und Fig. 3 sowie obige Beschreibung hierzu). Die Sendeeinheit 101, 201 umfasst wie oben beschrieben einem Reflektor 106, 206. Die Projektionsoptik 407 umfasst eine Kollimationsoptik **407c** sowie einen drehbaren Spiegelpaarhalter **407a** mit darauf angeordneten unterschiedlichen, aufeinander abgestimmten und zueinander paarweise angeordneten Spiegeloptikelementen **408a, 408b, 409a, 409b, 410a, 410b,** welche die Projektion kollimierter breitbandiger Strahlung auf den Untergrund 4, z.B. eine Straße, gewährleisten. Der Strahlengang ist am Beispiel des Spiegelpaares 408a und 408b durch Pfeile dargestellt. Im gezeigten Beispiel sind drei Spiegelpaare gezeigt, nämlich i.) 408a und 408b, ii.) 409a und 409b sowie iii.) 410a und 410b; ein Fachmann wird jedoch aufgrund seines allgemeinen Fachwissens verstehen, dass die Anzahl und Ausführung der Spiegelpaare variiert und entsprechend angepasst werden kann. Durch Verdrehen des Spiegelpaarhalters 407a kann nun eines der darauf angeordneten Spiegelpaare ausgewählt werden, um auf diese Weise die Leuchtweite und/oder die Leuchttiefe des breitbandigen Strahlers 102, 202 einzustellen und somit die gewünschte Ausleuchtung des molekülspektroskopisch zu bestimmenden Untergrunds 4 mit der breitbandigen Strahlung zu erhalten. Die Spiegeloptikelemente 408a, 408b, 409a, 409b, 410a, 410b können als Parabol-, Hyperbol-, Freiform- oder Konkavspiegel ausgebildet sein. Die Kollimationsoptik 407c kann eine kollimierende Spiegeloptik oder ein kollimierendes Optikelement, das aus üblichen IR-transparenten Materialien wie bereits oben im Detail beschrieben gefertigt ist, umfassen; derartige Kollimationsoptiken sind dem einschlägigen Fachmann bekannt.

**Fig. 6** zeigt die steuer- und einstellbare adaptive Projektionsoptik 107 aus Fig. 2 zur Steuerung der Leuchtweite und/oder der Leuchttiefe eines breitbandigen Strahlers, z.B. eines breitbandigen Strahlers 102, 202, 302 aus Fig. 2, Fig. 3 bzw. Fig. 4. Die adaptive Projektionsoptik 107 ist aus einer im Sinne eines reflektierenden Strahlenaufweiterpaares gestalteten Kombination aus zwei getrennt verschwenkbaren konkav gekrümmten Spiegelelementen **107a, 107b** (z.B. Kombinationen aus sphärischen Spiegeln mit unterschiedlichen Radien; Parabol-, Hyperbol-, Freiformspiegeln) und einer Kollimationsoptik **107c** aufgebaut. Die Verschwenkbarkeit der Spiegelelemente 107a, 107b ist durch kleine Doppelpfeile dargestellt. Insbesondere durch das Verschwenken aufeinander abgestimmter Elemente mit frei verlaufend geformter Spiegeloberfläche 107a, 107b lässt sich neben der Ausrichtung auch die Leuchtweite und/oder die Leuchttiefe des breitbandigen Strahlers 102, 202 nach an sich bekannter Art mittels der Steuerungs- und Auswerteeinrichtung 105 einstellen und steuern. Der Einsatz von Spiegelelementen 107a, 107b hat den Vorteil, dass mit diesen Spiegelelementen wellenlängenabhängige Fehler bzw. Farbfehler minimiert werden und ein breiter Wellenlängenbereich abgedeckt ist. Die Kollimationsoptik 107c kann eine kollimierende Spiegeloptik oder ein kollimierendes Optikelement, das aus üblichen IR-transparenten Materialien wie bereits oben im Detail beschrieben gefertigt ist, umfassen; derartige Kollimationsoptiken sind dem einschlägigen Fachmann bekannt.

**Fig. 7** zeigt eine erste Variante für eine Empfangsoptik **108** für einen Strahlungsempfänger 104 aus Fig. 2. Bei der in Fig. 7 gezeigten Empfangsoptik 108 handelt es sich um eine statische Anordnung aus zwei Spiegelelementen **108a, 108b,** welche die vom Untergrund 4 (siehe Fig. 2) reflektierte Strahlung einfangen und an den Strahlungsempfänger 104 weiterleiten (der Strahlengang ist durch den gestrichelten Pfeil dargestellt).

**Fig. 8** zeigt eine zweite Variante für eine Empfangsoptik **109** für einen Strahlungsempfänger 104 aus Fig. 2. Bei der in Fig. 8 gezeigten Empfangsoptik 109 handelt es sich um eine Anordnung aus zwei verschwenkbaren Spiegelelementen **109a, 109b** mit aufeinander abgestimmter Konkavoberflächenform oder Freiformoberflächenform (Verschwenkbarkeit durch kleine Doppelpfeile dargestellt), welche die vom Untergrund 4 (siehe Fig. 2) reflektierte Strahlung einfangen und an den Strahlungsempfänger 104 weiterleiten (der Strahlengang ist durch den gestrichelten Pfeil dargestellt). Durch Verschwenken der Spiegelelemente 109a, 109b der Empfangsoptik 109 lässt sich der Empfangsbereich nach an sich bekannter Art mittels der Steuerungs- und Auswerteeinrichtung 105 einstellen und steuern, so dass durch Einsatz dieser Empfangsoptik 109 ein adaptiver Strahlungsempfänger 104 realisiert werden kann. Der mit einer Empfangsoptik 109 kombinierte adaptive Strahlungsempfänger 104 ist dazu eingerichtet, die von dem Untergrund reflektierte Strahlung adaptiv zeitlich und örtlich aufgelöst zu detektieren. Mittels des adaptiven Strahlungsempfängers 104 kann der zu erfassende Bereich ("field of analysis" FoA) des Untergrunds, von welchem die reflektierte Strahlung detektiert werden soll, insbesondere die von den ausgewählten Bereichen des Untergrunds reflektierte Strahlung gemäß dem erfindungsgemäßen Verfahren, entsprechend ausgewählt werden.

**Fig. 9** zeigt eine Array-artige Anordnung **500** einer Mehrzahl an adaptiven Strahlungsemittern 103 (bezüglich der Strahlungsemitter 103 siehe Fig. 2), welche jeweils unabhängig voneinander ansteuerbar sind. In dem in Fig. 9 gezeigten Strahlungsemitter-Array sind die adaptiven Strahlungsemitter 103 in drei Reihen mit jeweils sechs Strahlungsemittern 103 pro Reihe angeordnet. Einem Fachmann wird jedoch klar sein, dass die Anzahl der Reihen variieren kann und z.B. eine einreihige Ausführung möglich ist. In dem in Fig. 9 gezeigten Beispiel können die adaptiven Strahlungsemitter 103 einen oder mehrere längliche Strahlungsemittersegmente 103a umfassen, die vertikal oder horizontal zur Fahrtrichtung des Kraftfahrzeugs 1 (vgl. Fig. 1) verlaufen können. Die Strahlungsemittersegmente 103a sind jeweils einzeln verschwenkbar und können eine variable Intensität oder einen variablen Scanbereich in Bezug auf den zu erfassenden Bereich ("field of analysis" FoA; siehe Bereich 4c in Fig. 2) des Untergrunds 4 aufweisen. Die adaptiven Strahlungsemitter 103 können jeweils auf die spezifische Wellenlänge bzw. den spezifischen Wellenlängenbereich verschiedener Oberflächenleitanalyten abgestimmt sein. Wie oben erwähnt, können die adaptiven Strahlungsemitter 103 zumindest einen adaptiven Quantenkaskadenlaser (QC) und/oder zumindest einen adaptiven Diodenlaser umfassen.

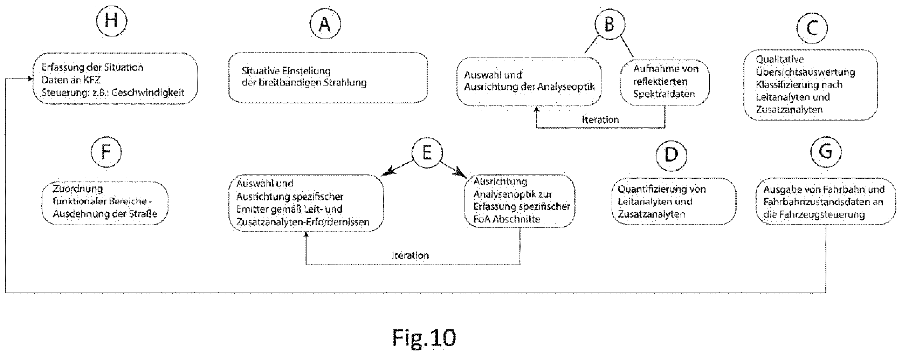

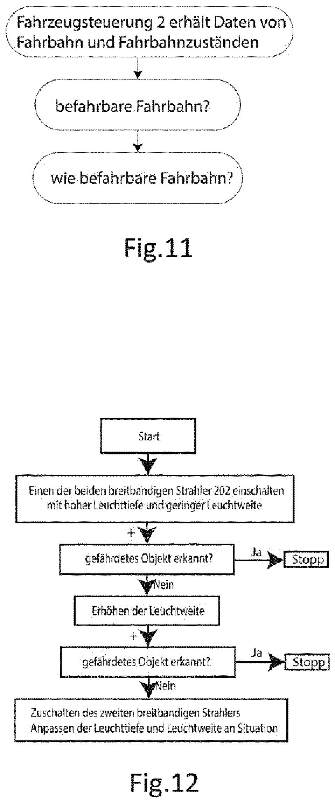

**Fig. 10** zeigt ein Flussdiagramm, in welchem das Grundprinzip des Verfahrens gemäß der Erfindung unter Verwendung einer Sensoreinheit gemäß der Erfindung, beispielhaft die Sensoreinheit 100 gemäß Fig. 2, dargestellt ist. Ferner wird auch auf die Ausführungsbeispiele aus den Fig. 1 und 3-9 verwiesen, die gleichermaßen im erfindungsgemäßen Verfahren anwendbar sind. Das erfindungsgemäße Verfahren wird wie folgt beschrieben:
Zunächst wird mittels des breitbandigen Strahlers 102, 202, 302 eine breitbandige Strahlung im VIS/IR-Wellenlängenspektrum oder im IR-Wellenlängenspektrum auf den vor dem Kraftfahrzeug befindlichen Untergrund emittiert (*"(A) Situative Einstellung der breitbandigen Strahlung*"). Dies erfolgt unter situativer Anpassung der Leuchtweite und/oder der Leuchttiefe der emittierten breitbandigen Strahlung, z.B. mittels der Projektionsoptik 107 (Fig. 6) oder der Projektionsoptik 407 (Fig. 5), mit dem Ziel, einen zu erfassenden Bereich 4a, 4b ("field of analysis" FoA) des Untergrunds 4 möglichst homogen mit der emittierten breitbandigen Strahlung auszuleuchten. Im Fall eines breitbandigen Strahlers 202 ist es zudem möglich, die insgesamt emittierte breitbandige Strahlung entsprechend zu dimmen (vgl. Fig. 3 und Fig. 12).

Die Analysenoptik mit den Strahlungsempfängern 104 wird entsprechend ausgewählt und ausgerichtet und, mittels der Strahlungsempfänger 104 wird die von Untergrund 4 reflektierte Strahlung zeitlich und örtlich aufgelöst detektiert (*"(B) Auswahl und Ausrichtung der Analysenoptik* und *Aufnahme von reflektierten Daten"* in Iteration ablaufend).

Im nächsten Schritt wird die detektierte Strahlung mittels der Steuerungs- und Auswerteeinrichtung 105 zum Erhalt von Spektraldaten ausgewertet und die Spektraldaten werden nach zumindest einem zu erwartenden Oberflächenleitanalyten (Leitanalyten, Zusatzanalyten) klassifiziert. Anschließend wird eine zeitlich und örtlich aufgelöste qualitative Übersichtsauswertung der Oberflächenbeschaffenheit generiert (*"(C) Qualitative Übersichtsauswertung, Klassifizierung nach Leitanalyten und Zusatzanalyten*")*.* Die in der Übersichtauswertung aufgefundenen Leitanalyten und Zusatzanalyten werden gegebenenfalls quantifiziert (*"(D) Quantifizierung von Leitanalyten und Zusatzanalyten")*

Anhand der qualitativen Übersichtsauswertung werden spezifische Bereiche 4c des Untergrunds 4 mittels der Steuerungs- und Auswerteeinrichtung 105 ausgewählt und - entsprechend den aufgefundenen Leitanalyten und Zusatzanalyten - werden die entsprechenden adaptiven Strahlungsemitter 103 ausgewählt und ausgerichtet. Auch die Analysenoptik mit den Strahlungsempfängern 104 wird entsprechend ausgewählt und auf die ausgewählten Bereiche 4c des Untergrunds 4 ausgerichtet (*"(B) Ausrichtung Analysenoptik zur Erfassung spezifischer FoA Abschnitte"* und *"Auswahl und Ausrichtung spezifischer Emitter gemäß Leitanalyten- und Zusatzanalyten-Erfordernissen"* in Iteration ablaufend).

Mittels der adaptiven Strahlungsemitter 103 wird nun eine adaptive Strahlung mit zumindest einer/einem für den zumindest einen zu erwartenden Oberflächenleitanalyten (Leitanalyten, Zusatzanalyten) spezifischen Wellenlänge/Wellenlängenbereich auf die vor dem Kraftfahrzeug befindlichen ausgewählten Bereiche 4c des Untergrunds 4 emittiert, wobei die Wellenlänge bzw. der Wellenlängenbereich der von den adaptiven Strahlungsemittern 103 emittierten Strahlung im Wellenlängenspektrum der von dem breitbandigen Strahler 102, 202, 302 emittierten breitbandigen Strahlung liegt. Mittels der Strahlungsempfänger 104 wird die von den ausgewählten Bereichen 4c des Untergrunds 4 reflektierte Strahlung zeitlich und örtlich aufgelöst detektiert.

Anschließend wird mittels der Steuerungs- und Auswerteeinrichtung 105 die detektierte Strahlung zum Erhalt von Oberflächenleitanalyten-spezifischen quantitativen Ist-Spektraldaten ausgewertet, und es erfolgt ein Vergleichen der Oberflächenleitanalyten-spezifischen quantitativen Ist-Spektraldaten mit vorgebbaren quantitativen Oberflächenleitanalyten-Soll-Spektraldaten zum Erhalt zumindest einer örtlich und zeitlich aufgelösten Oberflächenbeschaffenheitsangabe in Bezug auf die ausgewählten Bereiche 4c des Untergrunds 4. Auf diese Weise wird eine zeitliche und örtliche Zuordnung funktionaler Untergrundbereiche möglich, unter anderem kann die Ausdehnung der Fahrbahn/Straße bestimmt werden. (*"(F) Zuordnung funktionaler Bereiche* - *Ausdehnung der Straße"*). Die Oberflächenbeschaffenheitsangabe in Bezug auf den vor dem Kraftfahrzeug befindlichen Untergrund kann beispielsweise zumindest eine der folgenden Angaben umfassen: "befahrbarer Untergrund/Fahrbahn", "nicht befahrbarer Untergrund/Fahrbahn" "keine asphaltierte Fahrbahn", "asphaltierte Fahrbahn" , "nasse Fahrbahn", "Eis auf der Fahrbahn", "Schnee auf der Fahrbahn", "Hindernis auf der Fahrbahn", "aus Schotter aufgebaute oder geröllige Fahrbahn", "pflanzliches Material auf der Fahrbahn", "mit feinen Steinkörnungen belegte Fahrbahn/Asphalt", "partiell mit feuchtem Erdreich bedeckte Fahrbahn/Asphalt".

Die zumindest eine örtlich und zeitlich aufgelöste Oberflächenbeschaffenheitsangabe wird von der Steuerungs- und Auswerteeinrichtung 105 an das Kraftfahrzeugsteuerungssystem 2 des Kraftfahrzeugs 1 (vgl. Fig. 1 und Fig. 2) weitergeleitet (*"(G) Ausgabe von Fahrbahn- und Fahrbahnzustandsdaten an die Fahrzeugsteuerung").*

Das Kraftfahrzeugsteuerungssystem 2 ist dazu eingerichtet, die zumindest eine von dem Sensorsystem 100 molekülspektroskopisch bestimmte und an das Kraftfahrzeugsteuerungssystem 2 weitergeleitete örtlich und zeitlich aufgelöste Oberflächenbeschaffenheitsangabe des vor dem Kraftfahrzeug befindlichen Untergrunds 4 im Fahrbetrieb bzw. in der Steuerung der Fahrmanöver des Kraftfahrzeugs 1 zu berücksichtigen (*"(H) Erfassung der Situation, Daten an KFZ Steuerung: z.B.: Geschwindigkeit"),* wobei das Kraftfahrzeug 1 vorzugsweise ein selbstfahrendes Kraftfahrzeug ist.

**Fig. 11** zeigt ein Flussdiagramm zur Abfrage der Steuerung eines selbstfahrenden Kraftfahrzeugs 1, wobei insbesondere Bezug auf Fig. 1, Fig. 2 sowie Fig. 10 genommen wird. Die molekülspektroskopisch ermittelten Oberflächenbeschaffenheitsangaben des Untergrunds 4 werden von der Steuer- und Auswerteeinrichtung 105 des erfindungsgemäßen Sensorsystems 100 an das Kraftfahrzeugsteuerungssystem 2 des Kraftfahrzeugs 1 weitergeleitet (*"Fahrzeugsteuerung 2 erhält Daten von Fahrbahn und Fahrbahnzuständen").* Die gemäß dem erfindungsgemäßen Verfahren anhand der qualitativen Übersichtsauswertung spezifisch ausgewählten Untergrundbereiche (siehe Fig. 2, Bereiche 4c) werden zunächst dahingehend ausgewählt, ob es sich um einen befahrbaren Untergrund handelt (*"befahrbare Fahrbahn?"*), insbesondere um Bereiche, in denen anhand der Übersichtsauswertung dominant Asphalt (Leitanalyt Bitumen) erkannt wurde, wobei spezifische Bereiche des Untergrunds, in welchen anhand der Übersichtsauswertung Anomalien (z.B. Hindernisse, gefährliche Fahrbahnverhältnisse) erkannt wurden, besonders genau untersucht werden. Anhand dieser zeitlich und örtlich molekülspektroskopisch bestimmten Oberflächenbeschaffenheitsangaben kann mittels der Steuerungs- und Auswerteeinrichtung 105 ein zeitlich und örtlich aufgelöster Zustand des Untergrunds bzw. der Fahrbahn festgelegt werden (*"wie befahrbare Fahrbahn?"*), zum Beispiel "befahrbarer Untergrund/Fahrbahn", "Fahrbahn mit veränderter Oberflächeneigenschaft (Eis, Nässe, Hindernis)" oder "keine Fahrbahn/Straßenrand/unbefahrbares Gelände)". Beispielsweise kann der Fahrbahnzustand "asphaltierte Fahrbahn/Straße" anhand des Gehalts an Bitumen im Asphalt festgelegt werden, wobei ein sinnvoller Konzentrationsbereich von Bitumen im Asphalt in einem Bereich von 2% -10% liegt und der Rest Gestein ist; falls die molekülspektroskopisch erfasste Bitumenkonzentration unter 2% liegt, befindet sich keine asphaltierte Straße vor dem bewegten Kraftfahrzeug (Beschaffenheit des Untergrunds ist "keine asphaltierte Fahrbahn"). Zweckmäßigerweise werden die maximale Breite einer Fahrbahn und zusätzlich die angrenzenden Bereiche außerhalb der Fahrbahn analysiert, um den Kontrast zwischen den Zuständen "Fahrbahn" und "keine Fahrbahn/Nebenfahrbahn" erkennen zu können. Diese Informationen zu den Fahrbahnzuständen bzw.

Oberflächenbeschaffenheitsangaben des Untergrunds 4 werden von der Steuerungs- und Auswerteeinrichtung 104 an die Kraftfahrzeugsteuerung 2 weitergegeben und im Fahrbetrieb bzw. in der Steuerung der Fahrmanöver des Kraftfahrzeugs berücksichtigt (z.B. Straßenverlauf folgen, Ausweichen, Abbremsen, Geschwindigkeit drosseln etc.).

**Fig**. **12** zeigt ein Flussdiagramm, in welchem der Ablauf des Dimmens der insgesamt von einer Sendeeinheit 201 mit breitbandigen Strahlern 202 aus Fig. 3 emittierten breitbandigen Strahlung näher erläutert ist. Wie oben unter Fig. 3 bereits im Detail ausgeführt, umfasst die Sendeeinheit 202 zwei breitbandige Strahler 202 identischer Bauart, welche jeweils unabhängig voneinander ansteuerbar sind. Es ist wie erwähnt nicht möglich, einen einzelnen der breitbandigen Strahler 202 an sich zu dimmen, da sich ansonsten die spektrale Abstrahlung verändern würde. Zum Dimmen der insgesamt emittierten breitbandigen Strahlung können die beiden breitbandigen Strahler 202 jeweils unabhängig voneinander aus- oder eingeschalten werden, gegebenenfalls unter Anpassen der Leuchttiefe und/oder der Leuchtweite der insgesamt emittierten breitbandigen Strahlung. Zum Dimmen wird zunächst einer der beiden breitbandigen Strahler 202 mit hoher Leuchttiefe und geringer Leuchtweite eingeschalten. Wird ein gefährdetes Objekt, insbesondere ein Lebewesen, in dem von dem breitbandigen Strahler 202 ausgeleuchteten Bereich des Untergrunds 4 mittels des erfindungsgemäßen Sensorsystems molekülspektroskopisch erkannt, wird der Ablauf gestoppt oder der eingeschaltete breitbandige Strahler 202 wird wieder ausgeschalten. Wir kein gefährdetes Objekt erkannt/ detektiert, wird zunächst die Leuchtweite des breitbandigen Strahlers erhöht und bei erhöhter Leuchtweite wiederum geprüft, ob nunmehr ein gefährdetes Objekt erkennbar ist. Ist ein gefährdetes Objekt erkennbar, wird der Ablauf gestoppt oder der eingeschaltete breitbandige Strahler 202 wird wieder ausgeschalten. Wird kein gefährdetes Objekt erkannt/detektiert, wird der zweite breitbandige Strahler 202 zugeschaltet und die Leuchttiefe und Leuchtweite des zweiten breitbandigen Strahlers 202 situationsgebunden angepasst. Ein Fachmann auf dem Gebiet ist ohne weiteres in der Lage, den in Fig. 12 dargestellten Ablauf mit zwei breitbandigen Strahlern 202 auf Sensorsysteme bzw. Sendeeinheiten mit mehr als zwei breitbandigen Strahlern anzuwenden.

### BEZUGSZEICHENLISTE

- 1: Kraftfahrzeug
- 2: Kraftfahrzeugsteuerungssystem
- 3: Kraftfahrzeugvorderfront
- 4: Untergrund
- 4a, 4b: von breitbandigem Strahler beleuchteter Bereich des Untergrunds
- 4c: von adaptiven Strahlungsemitter beleuchteter Bereich des Untergrunds
- 5: Asphaltstraße
- 6: Mittelstreifenmarkierung zur Fahrbahneinteilung
- 7: Gesendete Analysenspektren
- 8: Empfangene substanzspezifische Spektren
- 9: Pflanzenmaterial
- 10: Wasser
- 11: Hindernis
- 100: Sensorsystem
- 101: Sendeeinheit
- 102: breitbandiger Strahler
- 103: adaptiver Strahlungsemitter
- 103a: Strahlungsemittersegment
- 104: Strahlungsempfänger
- 105: Steuerungs- und Auswerteeinrichtung
- 106: Reflektor breitbandiger Strahler
- 107: Projektionsoptik breitbandiger Strahler
- 107a,107b: Spiegelelemente (verschwenkbar)
- 107c: Kollimationsoptik
- 108: Empfangsoptik (statisch)
- 108a, 108b: Spiegelelemente
- 109: Empfangsoptik (adaptiv)
- 109a, 109b: Spiegelelemente (verschwenkbar)
- 201: Sendeeinheit mit zwei breitbandigen Strahlern
- 202: Breitbandiger Strahler
- 206: Reflektor
- 301: Sendeeinheit mit einem breitbandigen Strahler
- 302: Breitbandiger Strahler
- 306: Reflektor
- 407: Projektionsoptik breitbandiger Strahler
- 407a: Spiegelpaarhalter
- 407c: Kollimationsoptik
- 408a, 408b, 409a, 409b, 410a, 410b: Spiegeloptikelement
- 500: Strahlungsemitter-Array

## Patentansprüche

1. Sensorsystem (100) zur molekülspektroskopischen Bestimmung der Oberflächenbeschaffenheit eines vor einem Kraftfahrzeug (1), insbesondere selbstfahrenden Kraftfahrzeug, befindlichen Untergrunds (4), wobei das Sensorsystem (100) aufweist:
eine Sendeeinheit (101, 201, 301) umfassend mindestens einen breitbandigen Strahler (102, 202, 302), der dazu eingerichtet ist, breitbandige Strahlung im VIS/IR-Wellenlängenspektrum oder im IR-Wellenlängenspektrum auf einen vor einem Kraftfahrzeug (1), insbesondere selbstfahrenden Kraftfahrzeug, befindlichen Untergrund (4) zu emittieren;
mindestens einen adaptiven Strahlungsemitter (103), der dazu eingerichtet ist, eine adaptive Strahlung mit zumindest einer/einem für zumindest einen Oberflächenleitanalyten des Untergrunds (4) spezifischen Wellenlänge/Wellenlängenbereich zu erzeugen und auf den vor dem Kraftfahrzeug (1) befindlichen Untergrund (4) zu emittieren, wobei die Wellenlänge bzw. der Wellenlängenbereich der von dem mindestens einen adaptiven Strahlungsemitter (103) emittierten adaptiven Strahlung im Wellenlängenspektrum der von dem breitbandigen Strahler (102, 202, 302) emittierten breitbandigen Strahlung liegt;
mindestens einen Strahlungsempfänger (104), der dazu eingerichtet ist, die von dem Untergrund (4) reflektierte Strahlung örtlich und zeitlich aufgelöst zu detektieren;
und
eine Steuerungs- und Auswerteeinrichtung (105), welche zur Steuerung der Sendeeinheit (101, 201, 301), des mindestens einen adaptiven Strahlungsemitters (103) und des mindestens einen Strahlungsempfänger (104) eingerichtet und an ein Kraftfahrzeugsteuerungssystem (2) des Kraftfahrzeugs (1) anschließbar ist, und welche ferner dazu eingerichtet ist, die von dem mindestens einen Strahlungsempfänger (104) detektierte Strahlung zum Erhalt von Spektraldaten auszuwerten, die erhaltenen Spektraldaten nach dem zumindest einen zu erwartenden Oberflächenleitanalyten zu klassifizieren, sowie die erhaltenen Spektraldaten mit vorgebbaren Oberflächenleitanalyten-Soll-Spektraldaten zum Erhalt zumindest einer örtlich und zeitlich aufgelösten Oberflächenbeschaffenheitsangabe des vor dem Kraftfahrzeug (1) befindlichen Untergrunds (4) zu vergleichen,
**dadurch gekennzeichnet, dass**
die Sendeeinheit (101, 201, 301) zwei oder mehr breitbandige Strahler (102, 202, 302) identischer Bauart umfasst, welche jeweils eine stabförmige Form aufweisen, an jeweils einer Stirnseite miteinander verbunden sind und jeweils unabhängig voneinander ansteuerbar sind.

2. Sensorsystem nach Anspruch 1, **dadurch gekennzeichnet, dass** der zumindest eine breitbandige Strahler (101, 201, 301) dazu eingerichtet ist, breitbandige Strahlung mit einem Wellenlängenspektrum von 0,4 µm - 20 µm, vorzugsweise mit einem Wellenlängenspektrum von 0,8 µm - 10 µm, auf den vor dem Kraftfahrzeug (1) befindlichen Untergrund (4) zu emittieren und dass die zumindest eine Wellenlänge bzw. der zumindest eine Wellenlängenbereich der von dem mindestens einen adaptiven Strahlungsemitter (103) emittierten Strahlung in einem Wellenlängenbereich von 0,4 µm - 20 µm, vorzugsweise in einem Wellenlängenbereich von 0,8 µm - 10 µm, liegt.

3. Sensorsystem nach Anspruch 1 oder 2, **dadurch gekennzeichnet, dass** die Sendeeinheit (101, 201, 301) einen, vorzugsweise elliptischen, Reflektor (106, 206, 306) umfasst, welcher dazu eingerichtet ist, die von dem zumindest einen breitbandigen Strahler (102, 202, 302) emittierte VIS/IR-Strahlung auf den vor dem Kraftfahrzeug (1) befindlichen Untergrund (4) zu reflektieren.

4. Sensorsystem nach einem der Ansprüche 1 bis 3, **dadurch gekennzeichnet, dass** dem zumindest einen breitbandigen Strahler (102, 202, 302) in Emissionsrichtung eine steuer- und einstellbare Projektionsoptik (107, 407) zur Steuerung der Leuchtweite und/oder der Leuchttiefe der emittierten breitbandigen Strahlung (102, 202, 302) nachgeschaltet ist.

5. Sensorsystem einem der Ansprüche 1 bis 4, **dadurch gekennzeichnet, dass** das Sensorsystem (100) eine Mehrzahl an adaptiven Strahlungsemittern (103) und/oder eine Mehrzahl an Strahlungsempfängern (104) umfasst, welche jeweils unabhängig voneinander ansteuerbar sind.

6. Sensorsystem nach einem der Ansprüche 1 bis 5, **dadurch gekennzeichnet, dass** der mindestens eine adaptive Strahlungsemitter (103) zumindest einen adaptiven Quantenkaskadenlaser und/oder zumindest einen adaptiven Diodenlaser umfasst.

7. Sensorsystem nach einem der Ansprüche 1 bis 6, **dadurch gekennzeichnet, dass** dem mindestens einen breitbandigen Strahler (102, 202, 302) und/oder dem mindestens einen adaptiven Strahlungsemitter (103) in Abstrahlrichtung ein ansteuerbares Modulationselement zur Modulation der emittierten Strahlung nachgeschaltet ist.

8. Sensorsystem nach einem der Ansprüche 1 bis 7, **dadurch gekennzeichnet, dass** der Strahlungsempfänger (104) ein adaptiver Strahlungsempfänger ist.

9. Verfahren zur molekülspektroskopischen Bestimmung der Oberflächenbeschaffenheit eines vor einem Kraftfahrzeug (1), insbesondere selbstfahrenden Kraftfahrzeug, befindlichen Untergrunds (4) unter Verwendung einer Sensoreinheit (100) gemäß einem der Ansprüche 1 bis 8, wobei das Verfahren durch die folgenden Schritte gekennzeichnet ist:
a.) mittels des zumindest einen breitbandigen Strahlers (102, 202, 302) Emittieren einer breitbandigen Strahlung im VIS/IR-Wellenlängenspektrum oder im IR-Wellenlängenspektrum auf den vor dem Kraftfahrzeug (1) befindlichen Untergrund (4), gegebenenfalls unter Anpassung der Leuchtweite und/oder der Leuchttiefe der emittierten breitbandigen Strahlung,
b.) mittels des mindestens einen Strahlungsempfängers (104) zeitlich und örtlich aufgelöstes Detektieren der von dem Untergrund (4) reflektierten Strahlung,
c.) mittels der Steuerungs- und Auswerteeinrichtung (105) Auswerten der detektierten Strahlung zum Erhalt von Spektraldaten, Klassifizieren der Spektraldaten nach zumindest einem zu erwartenden Oberflächenleitanalyten und Generieren einer zeitlich und örtlich aufgelösten qualitativen Übersichtsauswertung der Oberflächenbeschaffenheit, und Auswählen spezifischer Bereiche (4c) des Untergrunds (4) anhand der qualitativen Übersichtsauswertung,
d.) mittels des mindestens einen adaptiven Strahlungsemitters (103) Emittieren einer adaptiven Strahlung mit zumindest einer/einem für den zumindest einen zu erwartenden Oberflächenleitanalyten spezifischen Wellenlänge/Wellenlängenbereich auf die vor dem Kraftfahrzeug (1) befindlichen ausgewählten Bereiche (4c) des Untergrunds (4), wobei die Wellenlänge bzw. der Wellenlängenbereich der von dem mindestens einen adaptiven Strahlungsemitter (103) emittierten Strahlung im Wellenlängenspektrum der von dem breitbandigen Strahler (102, 202, 302) emittierten breitbandigen Strahlung liegt,
e.) mittels des mindestens einen Strahlungsempfängers (104) zeitlich und örtlich aufgelöstes Detektieren der von den ausgewählten Bereichen (4c) des Untergrunds (4) reflektierten Strahlung,
f.) mittels der Steuerungs- und Auswerteeinrichtung (105) Auswerten der detektierten Strahlung zum Erhalt von Oberflächenleitanalyten-spezifischen quantitativen Ist-Spektraldaten, und Vergleichen der Oberflächenleitanalyten-spezifischen quantitativen Ist-Spektraldaten mit vorgebbaren quantitativen Oberflächenleitanalyten-Soll-Spektraldaten zum Erhalt zumindest einer örtlich und zeitlich aufgelösten Oberflächenbeschaffenheitsangabe in Bezug auf die ausgewählten Bereiche (4c) des Untergrunds (4), und
g.) Weiterleiten der zumindest einen örtlich und zeitlich aufgelösten Oberflächenbeschaffenheitsangabe an ein Kraftfahrzeugssteuerungssystem (2) des Kraftfahrzeugs (1), wobei
die Sendeeinheit (101, 201) zwei oder mehr breitbandige Strahler (102, 202) identischer Bauart umfasst, welche jeweils eine stabförmige Form aufweisen, an jeweils einer Stirnseite miteinander verbunden sind und jeweils unabhängig voneinander ansteuerbar sind, wobei zum Dimmen der insgesamt emittierten breitbandigen Strahlung die breitbandigen Strahler jeweils unabhängig voneinander aus- oder eingeschalten werden, gegebenenfalls unter Anpassen der Leuchttiefe und/oder der Leuchtweite der insgesamt emittierten breitbandigen Strahlung.

10. Verfahren nach Anspruch 9, **dadurch gekennzeichnet, dass** in Schritt a.) von dem breitbandigen Strahler (102, 202, 302) breitbandige Strahlung mit einem Wellenlängenspektrum von 0,4 µm - 20 µm, vorzugsweise mit einem Wellenlängenspektrum von 0,8 µm - 10 µm, auf den vor dem Kraftfahrzeug befindlichen Untergrund emittiert wird und dass in Schritt d.) von dem mindestens einen adaptiven Strahlungsemitter (103) zumindest eine adaptive Strahlung emittiert wird, die eine Wellenlänge bzw. einen Wellenlängenbereich aufweist, die/der in einem Wellenlängenbereich von 0,4 µm - 20 µm, vorzugsweise in einem Wellenlängenbereich von 0,8 µm - 10 µm, liegt.

11. Sensorsystem nach einem der Ansprüche 1 bis 8 bzw. Verfahren nach Anspruch 9 oder 10, **dadurch gekennzeichnet, dass** die Oberflächenbeschaffenheitsangabe in Bezug auf den vor dem Kraftfahrzeug (1) befindlichen Untergrund (4) zumindest eine der folgenden Angaben umfasst: "befahrbarer Untergrund/Fahrbahn", "nicht befahrbarer Untergrund/Fahrbahn" "keine asphaltierte Fahrbahn", "asphaltierte Fahrbahn" , "nasse Fahrbahn", "Eis auf der Fahrbahn", "Schnee auf der Fahrbahn", "Hindernis auf der Fahrbahn", "aus Schotter aufgebaute oder geröllige Fahrbahn", "pflanzliches Material auf der Fahrbahn", "mit feinen Steinkörnungen belegte Fahrbahn/Asphalt", "partiell mit feuchtem Erdreich bedeckte Fahrbahn/Asphalt".

12. Sensorsystem nach einem der Ansprüche 1 bis 8 bzw. Verfahren nach Anspruch 9 oder 10, **dadurch gekennzeichnet, dass** der Oberflächenleitanalyt des Untergrunds (4) zumindest einer aus der Gruppe ist, welche besteht aus: Bitumen, Chlorophyll, Wasser, Eis, Schnee, Titandioxid.

13. Kraftfahrzeug (1) umfassend ein Kraftfahrzeugsteuerungssystem (2) und ein Sensorsystem (100) nach einem der Ansprüche 1 bis 8, wobei das Kraftfahrzeugsteuerungssystem (2) dazu eingerichtet ist, zumindest eine von dem Sensorsystem (100) molekülspektroskopisch bestimmte und an das Kraftfahrzeugsteuerungssystem (2) weitergeleitete örtlich und zeitlich aufgelöste Oberflächenbeschaffenheitsangabe des vor dem Kraftfahrzeug (1) befindlichen Untergrunds (4) im Fahrbetrieb bzw. in der Steuerung der Fahrmanöver des Kraftfahrzeugs (1) zu berücksichtigen, wobei das Kraftfahrzeug (1) vorzugsweise ein selbstfahrendes Kraftfahrzeug ist.

## Claims

1. Sensor system (100) for molecular spectroscopic determination of the surface properties of a substrate (4) located in front of a motor vehicle (1), in particular a self-propelled motor vehicle, the sensor system (100) having
a transmitter unit (101, 201, 301) comprising at least one broadband emitter (102, 202, 302) which is set up to emit broadband radiation in the VIS/IR wavelength spectrum or in the IR wavelength spectrum onto a substrate (4) located in front of a motor vehicle (1), in particular a self-propelled motor vehicle;
at least one adaptive radiation emitter (103), which is set up to generate adaptive radiation with at least one wavelength/wavelength range specific for at least one surface conductivity analyte of the substrate (4) and to emit it onto the substrate (4) located in front of the motor vehicle (1), the wavelength or the wavelength range of the adaptive radiation emitted by the at least one adaptive radiation emitter (103) lies in the wavelength spectrum of the broadband radiation emitted by the broadband radiator (102, 202, 302);
at least one radiation receiver (104) which is set up to detect the radiation reflected by the background (4) with spatial and temporal resolution; and
a control and evaluation device (105) which is set up to control the transmitter unit (101, 201, 301), the at least one adaptive radiation emitter (103) and the at least one radiation receiver (104) and can be connected to a motor vehicle control system (2) of the motor vehicle (1), and which is furthermore set up to evaluate the radiation detected by the at least one radiation receiver (104) in order to obtain spectral data, classifying the spectral data obtained according to the at least one expected surface conductivity analyte, and comparing the spectral data obtained with predeterminable surface conductivity analyte target spectral data to obtain at least one spatially and temporally resolved surface condition specification of the subsurface (4) located in front of the motor vehicle (1),
**characterized in that**
the transmitter unit (101, 201, 301) comprises two or more broadband emitters (102, 202, 302) of identical design, which each have a rod-like shape, are connected to one another at one end face in each case and can each be controlled independently of one another.

2. Sensor system according to claim 1, **characterized in that** the at least one broadband emitter (101, 201, 301) is set up to emit broadband radiation with a wavelength spectrum of 0.4 µm - 20 µm, preferably with a wavelength spectrum of 0.8 µm - 10 µm, onto the substrate (4) located in front of the motor vehicle (1), and **in that** the at least one wavelength or the at least one wavelength range of the radiation emitted by the at least one adaptive radiation emitter (103) is in a wavelength range of 0.4 µm - 20 µm, preferably in a wavelength range of 0.8 µm - 10 µm.

3. Sensor system according to claim 1 or 2, **characterized in that** the transmitter unit (101, 201, 301) comprises a, preferably elliptical, reflector (106, 206, 306) which is set up to reflect the VIS/IR radiation emitted by the at least one broadband emitter (102, 202, 302) onto the substrate (4) located in front of the motor vehicle (1).

4. Sensor system according to one of claims 1 to 3, **characterized in that** a controllable and adjustable projection optics (107, 407) for controlling the light width and/or the light depth of the emitted broadband radiation (102, 202, 302) is connected downstream of the at least one broadband emitter (102, 202, 302) in the direction of emission.

5. Sensor system according to one of claims 1 to 4, **characterized in that** the sensor system (100) comprises a plurality of adaptive radiation emitters (103) and/or a plurality of radiation receivers (104), which can each be controlled independently of one another.

6. Sensor system according to one of claims 1 to 5, **characterized in that** the at least one adaptive radiation emitter (103) comprises at least one adaptive quantum cascade laser and/or at least one adaptive diode laser.

7. Sensor system according to one of claims 1 to 6, **characterized in that** a controllable modulation element for modulating the emitted radiation is connected downstream of the at least one broadband emitter (102, 202, 302) and/or the at least one adaptive radiation emitter (103) in the radiation direction.

8. Sensor system according to one of claims 1 to 7, **characterized in that** the radiation receiver (104) is an adaptive radiation receiver.

9. Method for molecular spectroscopic determination of the surface condition of a substrate (4) located in front of a motor vehicle (1), in particular a self-propelled motor vehicle, using a sensor unit (100) according to one of claims 1 to 8, wherein the method is **characterized by** the following steps:
a.) by means of the at least one broadband emitter (102, 202, 302), emitting broadband radiation in the VIS/IR wavelength spectrum or in the IR wavelength spectrum onto the substrate (4) located in front of the motor vehicle (1), if necessary by adjusting the luminous width and/or the luminous depth of the emitted broadband radiation,
b.) by means of the at least one radiation receiver (104), temporally and spatially resolved detection of the radiation reflected by the substrate (4),
c.) evaluating the detected radiation by means of the control and evaluation device (105) to obtain spectral data, classifying the spectral data according to at least one expected surface conductivity analyte and generating a temporally and spatially resolved qualitative overview evaluation of the surface condition, and selecting specific areas (4c) of the subsurface (4) on the basis of the qualitative overview evaluation,
d.) emitting, by means of the at least one adaptive radiation emitter (103), adaptive radiation with at least one wavelength/wavelength range specific for the at least one surface conductivity analyte to be expected onto the selected areas (4c) of the substrate (4) located in front of the motor vehicle (1), the wavelength or wavelength range of the radiation emitted by the at least one adaptive radiation emitter (103) being in the wavelength spectrum of the broadband radiation emitted by the broadband radiator (102, 202, 302). the wavelength range of the radiation emitted by the at least one adaptive radiation emitter (103) lies in the wavelength spectrum of the broadband radiation emitted by the broadband radiator (102, 202, 302),
e.) by means of the at least one radiation receiver (104), temporally and spatially resolved detection of the radiation reflected from the selected areas (4c) of the substrate (4),
f.) evaluating the detected radiation by means of the control and evaluation device (105) to obtain surface conductivity analyte-specific quantitative actual spectral data, and comparing the surface conductivity analyte-specific quantitative actual spectral data with predeterminable quantitative surface conductivity analyte target spectral data to obtain at least one spatially and temporally resolved surface condition indication in relation to the selected areas (4c) of the subsurface (4), and
g.) forwarding the at least one spatially and temporally resolved surface condition information to a motor vehicle control system (2) of the motor vehicle (1), wherein
the transmitting unit (101, 201) comprises two or more broadband emitters (102, 202) of identical design, which each have a rod-like shape, are connected to one another at one end face in each case and can each be controlled independently of one another, the broadband emitters being switched off or on independently of one another in each case for dimming the overall broadband radiation emitted, optionally with adjustment of the illumination depth and/or the illumination width of the overall broadband radiation emitted.

10. Method according to claim 9, **characterized in that** in step a.) broadband radiation with a wavelength spectrum of 0.4 µm - 20 µm, preferably with a wavelength spectrum of 0.8 µm - 10 µm, is emitted by the broadband emitter (102, 202, 302) onto the substrate located in front of the motor vehicle, and **in that** in step d.) broadband radiation with a wavelength spectrum of 0.4 µm - 20 µm, preferably with a wavelength spectrum of 0.8 µm - 10 µm, is emitted by the at least one adaptive emitter (102, 202, 302) onto the substrate located in front of the motor vehicle. ) at least one adaptive radiation is emitted by the at least one adaptive radiation emitter (103), which has a wavelength or a wavelength range which is in a wavelength range of 0.4 µm - 20 µm, preferably in a wavelength range of 0.8 µm - 10 µm.

11. Sensor system according to one of claims 1 to 8 or Method according to claim 9 or 10, **characterized in that** the surface condition information in relation to the ground (4) located in front of the motor vehicle (1) comprises at least one of the following information: "drivable surface/roadway", "non-drivable surface/roadway" "no asphalted roadway", "asphalted roadway" , "wet roadway", "ice on the roadway", "snow on the roadway", "obstacle on the roadway", "gravel or rough roadway", "plant material on the roadway", "roadway/asphalt covered with fine stone grains", "roadway/asphalt partially covered with moist soil".

12. Sensor system according to one of claims 1 to 8 or method according to claim 9 or 10, **characterized in that** the surface conductivity analyte of the subsoil (4) is at least one from the group consisting of: Bitumen, chlorophyll, water, ice, snow, titanium dioxide.

13. Motor vehicle (1) comprising a motor vehicle control system (2) and a sensor system (100) according to one of claims 1 to 8, wherein the motor vehicle control system (2) is set up to take into account at least one spatially and temporally resolved surface quality specification, determined by the sensor system (100) using molecular spectroscopy and forwarded to the motor vehicle control system (2), of the surface (4) located in front of the motor vehicle (1) during driving operation or in the control of the driving maneuvers of the motor vehicle (1), wherein the motor vehicle (1) is preferably a self-propelled motor vehicle, in the control of the driving maneuvers of the motor vehicle (1), the motor vehicle (1) preferably being a self-propelled motor vehicle.

## Revendications

1. Système de capteurs (100) pour la détermination par spectroscopie moléculaire de la nature de la surface d'un sol (4) se trouvant devant un véhicule automobile (1), en particulier un véhicule automobile autopropulsé, le système de capteurs (100) présentant :
une unité d'émission (101, 201, 301) comprenant au moins un émetteur à large bande (102, 202, 302) qui est conçu pour émettre un rayonnement à large bande dans le spectre de longueurs d'onde VIS/IR ou dans le spectre de longueurs d'onde IR sur un sous-sol (4) se trouvant devant un véhicule automobile (1), en particulier un véhicule automobile autopropulsé ;
au moins un émetteur de rayonnement adaptatif (103), qui est conçu pour générer un rayonnement adaptatif avec au moins une longueur d'onde/gamme de longueurs d'onde spécifique pour au moins un analyte de conduction de surface du sous-sol (4) et pour l'émettre sur le sous-sol (4) se trouvant devant le véhicule automobile (1), la longueur d'onde ou la gamme de longueurs d'onde de l'émetteur de rayonnement adaptatif (103) étant inférieure à la longueur d'onde/gamme de longueurs d'onde de l'émetteur de rayonnement adaptatif (103). la plage de longueurs d'onde du rayonnement adaptatif émis par l'au moins un émetteur de rayonnement adaptatif (103) se situe dans le spectre de longueurs d'onde du rayonnement à large bande émis par l'émetteur à large bande (102, 202, 302) ;
au moins un récepteur de rayonnement (104), qui est conçu pour détecter le rayonnement réfléchi par le support (4) avec une résolution locale et temporelle ;
et
un dispositif de commande et d'évaluation (105), qui est conçu pour commander l'unité d'émission (101, 201, 301), l'au moins un émetteur de rayonnement adaptatif (103) et l'au moins un récepteur de rayonnement (104) et qui peut être raccordé à un système de commande de véhicule (2) du véhicule automobile (1), et qui est en outre conçu pour évaluer le rayonnement détecté par l'au moins un récepteur de rayonnement (104) pour obtenir des données spectrales, à classer les données spectrales obtenues selon l'au moins un analyte de conduction de surface attendu, ainsi qu'à comparer les données spectrales obtenues avec des données spectrales de consigne d'analyte de conduction de surface pouvant être prédéfinies pour obtenir au moins une indication de qualité de surface résolue localement et temporellement du sous-sol (4) se trouvant devant le véhicule automobile (1),
**caractérisé en ce que**
l'unité d'émission (101, 201, 301) comprend deux ou plusieurs émetteurs à large bande (102, 202, 302) de construction identique, qui présentent chacun une forme de barreau, sont reliés entre eux chacun par une face frontale et peuvent être commandés chacun indépendamment les uns des autres.

2. Système de capteurs selon la revendication 1, **caractérisé en ce que** l'au moins un émetteur de rayonnement à large bande (101, 201, 301) est conçu pour émettre un rayonnement à large bande avec un spectre de longueurs d'onde de 0,4 µm - 20 µm, de préférence avec un spectre de longueurs d'onde de 0,8 µm - 10 µm, sur le sol (4) se trouvant devant le véhicule automobile (1) et **en ce que** l'au moins une longueur d'onde ou l'au moins une longueur d'onde l'au moins une plage de longueurs d'onde du rayonnement émis par l'au moins un émetteur de rayonnement adaptatif (103) se situe dans une plage de longueurs d'onde de 0,4 µm - 20 µm, de préférence dans une plage de longueurs d'onde de 0,8 µm - 10 µm.

3. Système de capteurs selon la revendication 1 ou 2, **caractérisé en ce que** l'unité d'émission (101, 201, 301) comprend un réflecteur (106, 206, 306), de préférence elliptique, qui est conçu pour réfléchir le rayonnement VIS/IR émis par l'au moins un émetteur à large bande (102, 202, 302) sur le sol (4) se trouvant devant le véhicule automobile (1).

4. Système de capteurs selon l'une des revendications 1 à 3, **caractérisé en ce que** l'au moins un émetteur à large bande (102, 202, 302) est suivi, dans la direction d'émission, d'une optique de projection (107, 407) commandable et réglable pour commander la portée et/ou la profondeur d'éclairage du rayonnement à large bande émis (102, 202, 302).

5. Système de capteurs selon l'une des revendications 1 à 4, **caractérisé en ce que** le système de capteurs (100) comprend une pluralité d'émetteurs de rayonnement adaptatifs (103) et/ou une pluralité de récepteurs de rayonnement (104), qui peuvent être commandés chacun indépendamment les uns des autres.

6. Système de capteurs selon l'une des revendications 1 à 5, **caractérisé en ce que** ledit au moins un émetteur de rayonnement adaptatif (103) comprend au moins un laser à cascade quantique adaptatif et/ou au moins un laser à diode adaptatif.

7. Système de capteurs selon l'une des revendications 1 à 6, **caractérisé en ce qu'**un élément de modulation commandable est monté en aval de l'au moins un émetteur de rayonnement à large bande (102, 202, 302) et/ou de l'au moins un émetteur de rayonnement adaptatif (103) dans la direction de rayonnement pour moduler le rayonnement émis.

8. Système de capteurs selon l'une des revendications 1 à 7, **caractérisé en ce que** le récepteur de rayonnement (104) est un récepteur de rayonnement adaptatif.

9. Procédé de détermination par spectroscopie moléculaire de la nature de la surface d'un sol (4) situé devant un véhicule automobile (1), notamment un véhicule automobile automoteur, en utilisant une unité de détection (100) selon l'une des revendications 1 à 8, le procédé étant **caractérisé par** les étapes suivantes :
a.) au moyen de l'au moins un émetteur à large bande (102, 202, 302), émission d'un rayonnement à large bande dans le spectre de longueurs d'onde VIS/IR ou dans le spectre de longueurs d'onde IR sur le support (4) se trouvant devant le véhicule automobile (1), le cas échéant en adaptant la portée et/ou la profondeur d'éclairage du rayonnement à large bande émis,
b.) au moyen de l'au moins un récepteur de rayonnement (104), détection résolue dans le temps et dans l'espace du rayonnement réfléchi par le support (4),
c.) au moyen du dispositif de commande et d'évaluation (105), évaluer le rayonnement détecté pour obtenir des données spectrales, classer les données spectrales selon au moins une analyse de conduction de surface attendue et générer une évaluation qualitative d'ensemble de la nature de la surface, résolue dans le temps et dans l'espace, et sélectionner des zones spécifiques (4c) du sous-sol (4) à l'aide de l'évaluation qualitative d'ensemble,
d.) au moyen du au moins un émetteur de rayonnement adaptatif (103), émission d'un rayonnement adaptatif avec au moins une longueur d'onde/gamme de longueurs d'onde spécifique pour le au moins un analyte de conductivité de surface attendu sur les zones sélectionnées (4c) du sous-sol (4) se trouvant devant le véhicule automobile (1), la longueur d'onde ou la gamme de longueurs d'onde étant comprise dans le domaine du spectre du rayonnement adaptatif, la plage de longueurs d'onde du rayonnement émis par l'au moins un émetteur de rayonnement adaptatif (103) se situe dans le spectre de longueurs d'onde du rayonnement à large bande émis par l'émetteur de rayonnement à large bande (102, 202, 302),
e.) au moyen du au moins un récepteur de rayonnement (104), détection résolue en temps et en lieu du rayonnement réfléchi par les zones sélectionnées (4c) du sous-sol (4),
f.) au moyen du dispositif de commande et d'évaluation (105), évaluation du rayonnement détecté pour obtenir des données spectrales quantitatives réelles spécifiques à l'analyse de conduction de surface, et comparaison des données spectrales quantitatives réelles spécifiques à l'analyse de conduction de surface avec des données spectrales quantitatives de consigne de l'analyse de conduction de surface pouvant être prédéfinies pour obtenir au moins une indication de qualité de surface résolue localement et dans le temps en ce qui concerne les zones sélectionnées (4c) du sous-sol (4), et
g.) transmettre l'au moins une indication de l'état de surface résolue localement et dans le temps à un système de commande (2) du véhicule automobile (1), dans lequel
l'unité d'émission (101, 201) comprend deux ou plusieurs émetteurs à large bande (102, 202) de construction identique, qui présentent chacun une forme de barre, sont reliés les uns aux autres sur un côté frontal respectif et peuvent être commandés chacun indépendamment les uns des autres, les émetteurs à large bande étant respectivement éteints ou allumés indépendamment les uns des autres pour faire varier le rayonnement à large bande émis au total, le cas échéant en adaptant la profondeur d'éclairage et/ou la portée d'éclairage du rayonnement à large bande émis au total.

10. Procédé selon la revendication 9, **caractérisé en ce que**, à l'étape a.), un rayonnement à large bande avec un spectre de longueurs d'onde de 0,4 µm - 20 µm, de préférence avec un spectre de longueurs d'onde de 0,8 µm - 10 µm, est émis par l'émetteur à large bande (102, 202, 302) sur le sol se trouvant devant le véhicule automobile et **en ce que**, à l'étape d.), l'émetteur à large bande (102, 202, 302) émet un rayonnement à large bande avec un spectre de longueurs d'onde de 0,4 µm - 20 µm. ), au moins un rayonnement adaptatif est émis par l'au moins un émetteur de rayonnement adaptatif (103), lequel présente une longueur d'onde ou une plage de longueurs d'onde qui se situe dans une plage de longueurs d'onde de 0,4 µm - 20 µm, de préférence dans une plage de longueurs d'onde de 0,8 µm - 10 µm.

11. Système de capteurs selon l'une des revendications 1 à 8 ou selon l'une des revendications 10. Procédé selon la revendication 9 ou 10, **caractérisé en ce que** l'indication d'état de surface comprend, par rapport au sol (4) situé devant le véhicule automobile (1), au moins l'une des indications suivantes : "sous-sol/chaussée carrossable", "sous-sol/chaussée non carrossable", "pas de chaussée asphaltée", "chaussée asphaltée", "chaussée mouillée", "glace sur la chaussée", "neige sur la chaussée", "obstacle sur la chaussée", "chaussée constituée de graviers ou de galets", "matière végétale sur la chaussée", "chaussée/asphalte recouvert(e) de fines particules de pierre", "chaussée/asphalte partiellement recouvert(e) de terre humide".

12. Système de capteurs selon l'une des revendications 1 à 8 ou procédé selon la revendication 9 ou 10, **caractérisé en ce que** l'analyte de conduction de surface du sous-sol (4) est au moins un élément du groupe constitué par : Bitume, Chlorophylle, Eau, Glace, Neige, Dioxyde de Titane.

13. Véhicule automobile (1) comprenant un système de commande de véhicule automobile (2) et un système de capteurs (100) selon l'une des revendications 1 à 8, le système de commande de véhicule automobile (2) étant conçu pour prendre en compte au moins une indication de la nature de la surface du sol (4) se trouvant devant le véhicule automobile (1), déterminée par spectroscopie moléculaire par le système de capteurs (100) et transmise au système de commande de véhicule automobile (2), dans le mode de conduite ou dans la prise en compte des manoeuvres. dans la commande des manoeuvres de conduite du véhicule automobile (1), le véhicule automobile (1) étant de préférence un véhicule automobile autopropulsé.
